# EUROPÄISCHE PATENTSCHRIFT

(11) **EP 1 047 877 B1**
(45) Veröffentlichungstag und Bekanntmachung des Hinweises auf die Patenterteilung: **17.04.2002**
(21) Anmeldenummer: 98945076.2
(22) Anmeldetag: 31.08.1998
(51) Int. Cl.: F04B 27/10

(54) **TAUMELSCHEIBENKOMPRESSOR**
SWASH PLATE COMPRESSOR
COMPRESSEUR A DISQUE EN NUTATION

(30) Priorität: 29.08.1997 DE 19737887; 23.09.1997 DE 19741979; 10.12.1997 DE 19754697; 11.12.1997 DE 19755188; 17.03.1998 DE 19812885
(43) Veröffentlichungstag der Anmeldung: 02.11.2000
(73) Patentinhaber: Luk Fahrzeug-Hydraulik GmbH & Co. KG, 61352 Bad Homburg (DE)
(72) Erfinder: SEIPEL, Volker, D-69625 Bensheim (DE); HINRICHS, Jan, D-61381 Friedrichsdorf (DE)
(74) Vertreter: Naumann, Ulrich, Dr.-Ing.
(86) Internationale Anmeldenummer: DE9802561
(87) Internationale Veröffentlichungsnummer: WO9911930

(56) Entgegenhaltungen:
- DE-A- 2 415 206
- DE-A- 3 500 298

## Beschreibung

Widerlager dient dazu, das Drehmoment, das von der rotierenden Taumelscheibe auf die Aufnahmescheibe übertragen wird, abzufangen.

Des weiteren ist bei den bekannten Kompressoren der hier in Rede stehenden Art wesentlich, daß sich der Neigungswinkel der Taumelscheibe bzw. Schwenkscheibe, nachfolgend stets Antriebsscheibe genannt, mittels einer besonderen Gelenkvorrichtung verändern läßt, um nämlich die Kolben hin und her zu bewegen. In Bezug auf die Kolbenlängsachse kippt jedoch die Antriebsscheibe aufgrund deren geometrischer Anordnung bzw. aufgrund der dortigen Schwenkachse derart, daß über der Hubstellung der Totpunkt "wandert". Dadurch entsteht ein Kippfehler bzw. ein Schadraum, der sich auf den Wirkungsgrad des Kompressors negativ auswirkt.

Aus der Praxis sind auch Ansätze zur Reduzierung des Schadraums bekannt, nämlich konstruktiv äußerst aufwendige Lösungen mit innen liegender Gelenkvorrichtung. Hierzu sei lediglich beispielhaft auf die DE-A-35 45 200 und DE-A-2 415 206 verwiesen. Trotz des dort betriebenen konstruktiven Aufwandes läßt sich die zuvor erörterte Problematik bislang nicht eliminieren, so daß bei den bislang bekannten Kompressoren der hier in Rede stehenden Art ein daraus resultierender Wirkungsgradverlust hingenommen wird.

Weiterhin betrifft die Erfindung einen Kompressor, insbesondere für die Klimaanlage eines Kraftfahrzeugs, mit einem Gehäuse und einer in dem Gehäuse angeordneten Verdichtereinheit zum Ansaugen und Verdichten eines Kältemittels, wobei das Kältemittel von einem vorzugsweise in einem stirnseitigen Gehäusedeckel ausgebildeten Ansaugbereich durch die Verdichtereinheit hindurch in den ebenfalls vorzugsweise in dem Gehäusedeckel ausgebildeten Auslaßbereich strömt.

Klimakompressoren unterschiedlichster Bauart arbeiten mit einem Kältemittel. Neben herkömmlichen Kältemitteln, deren Einsatz im Lichte eines zunehmenden Umweltbewußtseins immer kritischer erscheint, kann man als Kältemittel ein Inertgas, so bspw. CO₂, verwenden, welches unter umwelttechnischen Gesichtspunkten unbedenklich ist. Die Verwendung eines solchen Kältemittels führt jedoch zu höheren Drücken innerhalb des Verdichters, wodurch ganz besondere konstruktive Maßnahmen, bspw. im Hinblick auf die Materialauswahl und Wanddicke des Gehäuses, erforderlich sind.

Bei Verwendung eines hochfesten Werkstoffes für das Gehäuse des Kompressors ist es ohne weiteres möglich, die bei einem bereits im Ansaugzustand eine hohe Dichte aufweisenden Kältemittel erforderlichen bzw. auftretenden hohen Drücke aufzunehmen. So ist es beispielsweise erforderlich, Berstdrücken bis zu 30 MPa bei Austrittstemperaturen im Bereich von etwa 160°C bis 170°C standzuhalten.

Wie bereits zuvor erwähnt, umfassen Kompressoren der hier in Rede stehenden Art einen Ansaugbereich und einen Auslaßbereich. Während auf der Saugseite - im Ansaugbereich - Kältemittel mit einer Temperatur im Bereich zwischen 30°C und 40°C einströmt, treten auf der Druckseite, d.h. im Auslaßbereich, Temperaturen im Bereich zwischen 80°C und bis zu etwa 170°C auf.

Das Kompressorgehäuse ist in der Regel aus Metall, bspw. aus Aluminium, aus Edelstahl oder aus einem hochfesten Stahl gefertigt. Folglich wird sich die hohe Temperatur im Auslaßbereich - zwangsweise - auf den Ansaugbereich insoweit auswirken, als dieser über das mit dem Kältemittel in Kontakt kommende Gehäusematerial sowie "Innenleben" des Kompressors aufgewärmt wird. Folglich wird dadurch das ansaugseitige gasförmige Kältemittel erwärmt, wodurch dessen Dichte abnimmt. Dies wiederum führt zu einem Lieferverlust bzw. zu einer Reduzierung des Massenstroms an Kältemittel und somit zu einem Leistungsverlust des Kompressors. Aufgrund der Temperaturbeeinflussung des Auslaßbereichs gegenüber dem Ansaugbereich wird der Wirkungsgrad eines herkömmlichen Kompressors nicht unerheblich verringert.

Die Erfindung betrifft ebenso einen Kompressor, insbesondere für die Klimaanlage eines Kraftfahrzeugs, mit einem Gehäuse und einer in dem Gehäuse angeordneten Verdichtereinheit zum Ansaugen und Verdichten eines Kältemittels, wobei die Verdichtereinheit über eine Antriebswelle und ein an die Antriebswelle gekoppeltes Antriebsrad von einem Riemen angetrieben wird und wobei das Antriebsrad einen mit dem Riemen in Eingriff stehenden Riemenscheibenkörper aufweist, der über eine Kopplungseinrichtung direkt oder indirekt mit der Antriebswelle gekoppelt ist.

Die hier in Rede stehenden Kompressoren werden über einen Riemen angetrieben, der über eine nachfolgend als Antriebsrad bezeichnete Riemenscheibe geführt wird. Der Riemen wird wiederum über die Kurbelwelle des Verbrennungsmotors eines Kraftfahrzeugs angetrieben.

Beim Betreiben des Verdichters können Fehlfunktionen auftreten. So kann beispielsweise die Verdichtereinheit oder die Antriebswelle blockieren. Sofern der Riemen das Antriebsrad mit einem sehr kleinen Umschlingungswinkel belegt, wird der Riemen auf dem Antriebsrad bzw. auf der Riemenscheibe voraussichtlich rutschen, wobei sich dabei das Antriebsrad sehr stark erwärmt. Dies führt bereits nach kurzer Zeit zu einer Beschädigung und schließlich Zerstörung des Riemens, so daß auch die weiter durch den Riemen angetriebenen Aggregate, so beispielsweise die Wasserpumpe oder die Lichtmaschine, nicht mehr angetrieben werden. Das Kraftfahrzeug ist somit nicht mehr funktionsfähig.

Sofern der Riemen das Antriebsrad bzw. die Riemenscheibe mit einem größeren Umschlingungswinkel belegt, so beispielsweise um mehr als 180°, ist ein Rutschen des Riemens auf dem Antriebsrad bzw. auf der Riemenscheibe kaum noch möglich. Dies führt entweder zu einem Reißen des Riemens oder zu einem Abwürgen des Motors. Auch in einem solchen Falle ist das Kraftfahrzeug nicht mehr betriebsfähig.

Zur Vermeidung der voranstehend genannten Probleme hat man bereits in das Antriebsrad des Kompressors eine Elektromagnet-Kupplung integriert. Tritt Rutschen des Riemens auf oder tritt Rutschen der Kupplungshälften auf, führt dies zu einer sehr starken Erwärmung der Kupplung. Wird eine vorgegebene Temperatur erreicht, unterbricht eine Schmelzsicherung den Spulenstrom und die Kupplung entkoppelt den Kompressor, so daß sich der Riemen mit dem Riemenscheibenkörper des Antriebsrades weiter bewegen kann. Der Betrieb sicherheitsrelevanter Bauteile des Kraftfahrzeuges, so beispielsweise der Wasserpumpe und/oder der Lichtmaschine, die ebenfalls von diesem Riemen angetrieben werden, ist dadurch gewährleistet.

Die aus der Praxis bekannte Elektromagnet-Kupplung ist jedoch insoweit problematisch, als sie relativ groß baut, von den einzelnen Bauteilen her aufwendig ist und somit einen ganz erheblichen Kostenfaktor darstellt. Vor allem verursacht eine solche Elektromagnet-Kupplung aufgrund deren Komplexizität eine ganz erhebliche Gewichtsbelastung, die einer im heutigen Kraftfahrzeugbau stets angestrebten Gewichtsreduzierung diametral entgegen steht. Durch die erhebliche Baugröße des Kompressors ist dieser zum Einbau in kleine Motorräume nicht geeignet ist.

Aus der Praxis ist für sich gesehen auch bereits bekannt, eine Überlastkopplung mit einem scheibenförmigen, außenverzahnten Gummikörper vorgesehen, dessen Zähne bei Überbeanspruchung abscheren. Dabei handelt es sich um eine rein mechanische Überiastkopplung, deren Entkopplungsverhalten nur in einer gewissen Bandbreite definierbar ist. Jedenfalls ist eine solche Überlastkopplung wenig zuverlässig.

Der vorliegenden Erfindung liegt die Aufgabe zugrunde, einen Kompressor der eingangs genannten Art derart auszugestalten und weiterzubilden, daß gegenüber herkömmlichen Kompressoren der Wirkungsgrad günstiger wird, der Kompressor kleiner baut, das Gewicht reduziert wird und der Kompressor demnach leichter und preiswerter hergestellt werden kann. Weiterhin soll die Leistung erhöht und bei geringerem Aufwand zumindest die gleiche Sicherheit, insbesondere ein Schutz des Riementriebes und des Verbrennungsmotors gewährleistet werden, wie bei bisher bekannten Kompressoren.

Der erfindungsgemäße Kompressor löst die voranstehende Aufgabe durch die Merkmale des Patentanspruches 1. Danach ist ein Kompressor der eingangs genannten Art dadurch gekennzeichnet, daß die Antriebsscheibe derart gelagert ist, daß die Mittellinie der Lagerung (Schwenk- oder Lagerachse) eine Tangente des den Hub definierenden Teilkreises bildet, so daß der Neigungswinkel der Antriebsscheibe veränderbar ist, ohne den oberen Totpunkt über der Hubstellung zu verschieben.

Erfindungsgemäß ist zunächst einmal erkannt worden, daß sich durch Optimierung des Schadraums der Wirkungsgrad eines gattungsgemäßen Kompressors erhöhen läßt. Des weiteren ist erkannt worden, daß eine Optimierung des Schadraums dadurch möglich ist, daß eine besondere Lagerung der Antriebsscheibe, d.h. der Taumel- oder Schwenkscheibe, realisiert wird. Die Antriebsscheibe wird in erfindungsgemäßer Weise nämlich derart gelagert, daß die Mittellinie der Lagerung, d.h. die Schwenk- oder Lagerachse der Antriebsscheibe, eine Tangente des den Hub definierenden Teilkreises bildet, so daß der Neigungswinkel der Antriebsscheibe veränderbar ist, ohne den oberen Totpunkt über den Hub zu verschieben. Mit anderen Worten wird die Schwenk- oder Lagerachse der Antriebsscheibe derart positioniert, daß die Antriebsscheibe genau über der Kolbenlängsachse kippt. Dadurch ist ausgeschlossen, daß sich der Totpunkt bei der Hubstellung des Kolbens verändert bzw. daß der Totpunkt wandert. Vielmehr wird er über der Hubstellung konstant gehalten.

Letztendlich wird durch die erfindungsgemäße Maßnahme erreicht, daß der Momentapol auf dem Teilkreisdurchmesser liegt. Entsprechend ist der Momentanpol bezogen auf das rotierende Bezugssystem bei der Antriebswelle ortsfest, wobei hier Schwenkungen der Antriebsscheibe bis ca. 20° ohne weiteres realisierbar sind.

Im Konkreten ist die Antriebsscheibe über eine deren Randbereich zugeordnete Gelenkvorrichtung mit der Antriebswelle wirkverbunden. Dazu kann die Antriebsscheibe über die Gelenkvorrichtung an einen mit der Antriebswelle drehfest verbundenen Mitnahmekörper angelenkt sein, um dort nämlich die Schwenkbewegung ausüben zu können. In weiter vorteilhafter Weise ist die Antriebsscheibe von dem Mitnahmekörper zumindest teilweise umgeben, wobei dieser ringförmig, vorzugsweise trommelförmig, ausgebildet sein kann. Ebenso ist es denkbar, daß der Mitnahmekörper als Ringsegment ausgebildet ist. Jedenfalls kann es sich bei dem Mitnahmekörper sowohl um ein separates Bauteil als auch um einen integralen Bestandteil der Antriebswelle handeln.

In weiter vorteilhafter Weise bildet der Mitnahmekörper einen Anschlag für die Schwenkbewegung der Antriebsscheibe. Dabei kann er sich um einen Anschlag sowohl für die maximale als auch für die minimale Verschwenkung der Antriebsscheibe handeln. Entsprechend kommt dabei die Antriebsscheibe bzw. eine dort vorgesehene Schulter oder dergleichen innerhalb des Mitnahmekörpers zur Anlage, wobei dort entsprechende Anlageflächen, Stufen, Verkantungen oder dergleichen vorgesehen sind.

Die Antriebsscheibe ist über ein zwischen der Antriebsscheibe und dem Mitnahmekörper wirkendes Schwenklager gelagert, wobei dieses Schwenklager auf unterschiedlichste Arten konstruiert sein kann. So kann das Schwenklager beispielsweise Kugelabschnitte oder zwischen Antriebsscheibe und Mitnahmekörper wirkende Lagerstifte umfassen.

Entsprechend den voranstehenden Ausführungen ist die Gelenkvorrichtung dem Randbereich der Antriebsscheibe zugeordnet. Dabei ist es von weiterem Vorteil, daß das hier konkret gewählte Schwenklager entsprechend seiner Breite in den Mitnahmekörper derart positioniert eingreift, daß die Antriebsscheibe exakt über der Kolbenlängsachse kippt.

Wie ebenfalls bereits zuvor ausgeführt, dient die Antriebsscheibe zur Bewegung der Kolben. Dazu wirken zwischen der Antriebsscheibe und den Kolben Kopplungsmittel, die einen dem Kolben zugeordneten, vorzugsweise im Sinne einer Gleitbahn wirkenden Umgriff und einen der Antriebsscheibe zugeordneten, vorzugsweise im Sinne eines Gleitschuhs wirkenden Kugelkörper umfassen. Mit anderen Worten handelt es sich bei den Kopplungsmitteln um eine Anlenkung, die ein verschwenkfreies Bewegen der Kolben entlang der Kolbenlängsachse gestattet, wobei der Antrieb - über die Antriebsscheibe - mit sich ständig verändernden Winkeln angreift.

Hinsichtlich einer konkreten Ausgestaltung der Kopplungsmittel ist von ganz besonderer Bedeutung, daß der Umgriff des Kolbens auf der der Antriebswelle zugewandten Seite die Antriebsscheibe durchdringt und nach außen, vorzugsweise unter Einbeziehung des Gleitschuhs bzw. des Kugelkörpers, zumindest teilweise umgreift. Folglich erfolgt hier der Umgriff von innen, während der Umgriff bei den bislang bekannten Kompressoren der hier in Rede stehenden Art ausschließlich von außen realisiert ist. Bei entsprechender Dimensionierung des Zylinderblocks und der Kolben läßt sich hierdurch die Baugröße, jedenfalls aber der Halbkreisdurchmesser, reduzieren.

Des weiteren ist es von Vorteil, wenn der Zylinderblock eine Verdrehsicherung für die Kolben umfaßt. Die Verdrehsicherung kann auf unterschiedlichste Weisen realisiert sein. So könnte eine Abstützfläche zwischen Zylinderblock und Kolben vorgesehen sein, so daß insoweit ein Verdrehen des Kolbens ausgeschlossen ist. Ebenso könnte die Verdrehsicherung als Abstützfläche zwischen Kolben und Antriebswelle ausgeführt sein. Eine Abstützfläche zwischen Kolben und Mitnahmekörper ist ebenfalls denkbar. Alternativ dazu könnten die Kolben "nicht rund" ausgeführt sein, so daß bei entsprechender Gestaltung des Zylinderblocks eine Verdrehsicherung realisiert ist. Schließlich könnte dem Kolben ein Führungselement als Verdrehsicherung zugeordnet sein, wobei es sich dabei um einen Stift oder dergleichen handeln kann.

Auch könnte die Antriebsscheibe selbst modifiziert werden, nämlich im Sinne eines aus der Praxis hinlänglich bekannten Fliehkraftreglers arbeiten.

Hinsichtlich einer weiteren konkreten Realisierung der erfindungsgemäßen Lehre ist es von Vorteil, wenn die Antriebsscheibe über einen mit der Antriebswelle fest verbundenen, in der Antriebsscheibe vorzugsweise in deren Randbereich gleitend gelagerten Führungsarm mit der Antriebswelle wirkverbunden ist. Neben der Aufnahme der Axialkräfte könnte der Führungsarm auch das Drehmoment der Antriebswelle übertragen. Jedenfalls ist der Führungsarm fest mit der Antriebswelle verbunden, wobei die gleitende Lagerung des Führungsarms im Randbereich der Antriebsscheibe ein Kippen der Antriebsscheibe ermöglicht.

Insbesondere im Hinblick auf eine stabile Ausgestaltung des Führungsarms könnte dieser als Vierkant ausgebildet sein und in weiter vorteilhafter Weise orthogonal zu der Längsachse der Antriebswelle in dieser befestigt sein. Dabei ist es denkbar, daß der Führungsarm in eine entsprechende Ausnehmung der Antriebswelle eingepreßt ist. Die starre Anordnung des Führungsarms an bzw. in der Antriebswelle ist dann durch Kraftschluß gewährleistet.

Zur gleitenden Lagerung des Führungsarms in der Antriebsscheibe ist am freien Ende des Führungsarms ein Führungskörper ausgebildet, mit dem der Führungsarm in die Antriebsscheibe greift. Der Führungskörper könnte dabei quer zur Längsachse des Führungsarms im wesentlichen zylindrisch ausgebildet sein, wobei der Führungskörper direkt oder indirekt in der Antriebsscheibe gelagert ist.

So könnte der Führungskörper mit seiner Mantelfläche zur gleitenden Anlage an gegenüberliegenden Innenwandungen der Antriebsscheibe dienen, wobei sich dazu die im wesentlichen zylindrische Ausgestaltung des Führungskörpers ganz besonders eignet. Aufgrund des hier erforderlichen Eingriffs des Führungsarms in die Antriebsscheibe ist es möglich, daß die Innenwandung der Antriebsscheibe den Kippwinkel der Antriebsscheibe begrenzt, nämlich indem sie einen Anschlag für den mit der Antriebswelle fest verbundenen Führungsarm bildet.

Hinsichtlich der Wirkverbindung zwischen der schwenkbaren bzw. eine Taumelbewegung durchführenden Antriebsscheibe und den Kolben sind verschiedene Ausführungen denkbar. So könnte im Wirkbereich des Führungskörpers beidseits der Antriebsscheibe zum schwenkbaren Eingriff in den Kolben dienende Kugelsegmente vorgesehen sein, die nämlich zwischen der Außenwandung der ein- oder mehrteiligen Antriebsscheibe und entsprechenden Gleitflächen im Kolben wirken. Dabei liegt der Mittelpunkt der durch die beiden Kugelsegmente gebildeten Kugel im Mittelpunkt des zylindrischen Führungskörpers bzw. auf dessen Längsachse, so daß eine Verschiebung des oberen Totpunkts über der Hubstellung wirksam vermieden ist.

Zur Realisierung der am freien Ende des Kolbens vorzusehenden Gleitfläche könnte der Kolben mit seinem Anschlußbereich um das freie Ende der Antriebsscheibe auf die Kugelsegmente greifen. Dieser Umgriff könnte in etwa C-förmig ausgebildet sein, wobei beidseits der Antriebsscheibe ― zur Führung bzw. Aufnahme der Kugelsegmente ― entsprechende Kugelsegmentflächen ausgebildet sind. Jedenfalls läßt sich der Kolben über den Führungsarm und die hier vorgeschlagene Anlenkung problemlos führen.

Alternativ zu der voranstehend erörterten Ausgestaltung könnte die Antriebsscheibe über ein Gleitlager mit dem einen endseitigen Gleitschuh aufweisenden Kolben wirkverbunden sein. Dazu könnte der Kolben als zylindrischer Vollkörper mit beweglichem Gleitschuh ausgebildet sein, wobei der Gleitschuh mittels Kugelgelenk mit dem Kolben verbunden ist. Die Schwenkbewegung der Antriebsscheibe wird somit über das Kugelgelenk kompensiert.

Zur wirksamen Verbindung zwischen Antriebsscheibe und dem Kolben könnte ein besonderer Niederhalter vorgesehen sein, der den Gleitschuh auf die Antriebswelle drückt. Dieser Niederhalter ist auf jeden Fall drehfest angeordnet. Zwischen dem Niederhalter, dem Gleitschuh und der Antriebsscheibe wirkt ein Gleitlager. Dieses könnte in ganz besonders vorteilhafter Weise und unter Realisierung einer einfachen Bauweise einen sich zwischen Antriebsscheibe und Niederhalter erstreckenden Distanzring und eine sich an den Distanzring anschließende, sich zumindest teilweise über den Niederhalter erstreckende Niederhalterführung umfassen, wobei die dem Distanzring zugewandte Fläche der Antriebsscheibe letztendlich Bestandteil des Gleitlagers ist. Jedenfalls muß gewährleistet sein, daß die Antriebsscheibe drehen kann und daß eine gleitende Bewegung der Antriebsscheibe relativ zum Kolben möglich ist.

Der den Gleitschuh auf die Antriebsscheibe drückende Niederhalter könnte als vorzugsweise kreisrunde Scheibe ausgeführt sein, wobei eine Anpassung an die Antriebsscheibe von Vorteil ist. Entsprechend der Anzahl der Kolben sind dort Durchgänge für den Kolben bzw. für eine Verbindung zwischen dem Kugelgelenk und dem Gleitschuh vorgesehen, so daß der Kolben bzw. diese Verbindung durch den Niederhalter hindurch greifen kann. Die Durchgänge können sowohl als am Rand des Niederhalters auslaufende Schlitze oder als Längslöcher ausgebildet sein, wobei sich im Falle einer Ausgestaltung der Durchgänge als ― seitlich geschlossene ― Längslöcher eine höhere Steifigkeit des Niederhalters und somit ein höhreres Maß an Funktionssicherheit ergibt.

Zur axialen Führung der Antriebsscheibe, insbesondere auch zur Vermittlung des Drehmoments, greift ein fest mit der Antriebsscheibe verbundener Führungsstift in ein in der Antriebswelle ausgebildetes Langloch bzw. in einen entsprechenden Durchgang, wobei zwischen dem Führungsstift und dem Langloch hinreichend Spiel vorhanden ist. Der Führungsstift könnte einseitig in das Langloch hineinragen und dort enden. In ganz besonders vorteilhafter Weise erstreckt sich jedoch der Führungsstift durch das Langloch hindurch und ist beidseits der Antriebswelle mit der Antriebsscheibe verbunden. Eine sichere axiale Führung zwischen Antriebswelle und Antriebsscheibe, insbesondere aber auch zur Vermittlung des Drehmoments, ist somit gewährleistet.

Zur axialen Führung der Antriebsscheibe könnte ebenso ein fest mit der Antriebsscheibe verbundener Führungskörper in eine auf der Antriebswelle ausgebildete Führung greifen, die jedoch außerhalb der Antriebswelle ausgebildet ist. Ebenso könnte die Antriebsscheibe zur axialen Führung mittels einer Führungsmuffe auf die Antriebswelle greifen. Wesentlich ist hier jedenfalls, daß die axiale Führung der Antriebsscheibe durch Wirkverbindung mit der Antriebswelle und nicht etwa durch eine äußere Anlenkung der Antriebsscheibe erfolgt.

Der erfindungsgemäße Kompressor löst eine Teilaufgabe durch die Merkmale des Patentanspruches 47. Danach ist ein Kompressor der eingangs genannten Art dadurch gekennzeichnet, daß die mit dem Kältemittel in Berührung kommenden Bauteile, vorzugsweise die den Strömungspfad zwischen Ansaugbereich und Auslaßbereich bildenden Wandungen, zumindest geringfügig und bereichsweise gegenüber dem Kältemittel wärmeisoliert sind.

Erfindungsgemäß ist weiter erkannt worden, daß die hohe Temperaturdifferenz zwischen Auslaßbereich und Ansaugbereich eines herkömmlichen Kompressors der hier in Rede stehenden Art zu einer Verringerung des Wirkungsgrades führt, und zwar aufgrund einer Erwärmung des Ansaugbereichs und somit auch des dort einströmenden Kältemittels aufgrund der Wärmeleitfähigkeit der Kompressorbauteile.

In weiter erfindungsgemäßer Weise ist erkannt worden, daß sich die hier analysierte Problematik dadurch mindern läßt, daß man die mit dem Kältemittel in Berührung kommenden Bauteile gewissermaßen wärmeisoliert, so daß die Erwärmung des angesaugten Kältemittels zumindest reduziert wird. Dazu sind die den Strömungspfad zwischen Ansaugbereich und Auslaßbereich bildenden Wandungen zumindest geringfügig - bereichsweise - gegenüber dem Kältemittel wärmeisoliert. Unter dem Begriff "Wärmeisolation" ist hier keine vollständige Isolation zur Vermeidung eines Wärmetransports zu verstehen. Vielmehr ist hierunter eine Reduzierung der Wärmeleitfähigkeit von den Bauteilen des Kompressors zum Kältemittel mittels passiver Maßnahmen zu verstehen, wobei bereits eine bereichsweise vorgesehene Wärmeisolation die Aufwärmung des angesaugten Kältemittels verringert und somit den Wirkungsgrad des Kompressors erhöht.

Im Konkreten könnte die Wärmeisolation als Auskleidung aus einem eine geringe Wärmeleitfähigkeit aufweisenden Material ausgeführt sein. Ausgekleidet werden demnach die den Strömungspfad bildenden Wandungen innerhalb des Kompressors, wobei auch hier bereits eine partielle Auskleidung im Ansaugbereich zu einem ganz erheblichen Erfolg führt.

Im Hinblick auf eine besonders einfache Ausgestaltung des Kompressors könnte die Wärmeisolation als Beschichtung aus einem eine geringe Wärmeleitfähigkeit aufweisenden Material ausgeführt sein. Herkömmliche Beschichtungstechniken kommen hier in Frage, wobei das Material der Beschichtung, bspw. Nikasil, im Temperaturbereich bis zu 170°C temperaturbeständig sein muß.

Im Rahmen einer besonders einfachen Ausgestaltung des erfindungsgemäßen Kompressors ist die Wärmeisolation an der Innenwandung des Ansaugkanals vorgesehen. Bereits dadurch wird die Erwärmung des angesaugten Kältemittels ansaugseitig verringert. Zur weiterreichenden Reduzierung einer Erwärmung des angesaugten Kältemittels ist die Wärmeisolation in ganz besonders vorteilhafter Weise an der Innenwandung des gesamten Ansaugbereichs vorgesehen. Eine Erwärmung des angesaugten Kältemittels im Ansaugbereich wird dadurch abermals verringert.

Geht man davon aus, daß sowohl der Ansaugbereich als auch der Auslaßbereich in einem oftmals auch als Druckdeckel bezeichneten Gehäusedeckel ausgebildet ist, könnte man die Wärmeisolation gleichermaßen auch an der Innenwandung des Auslaßkanals oder gar an der Innenwandung des gesamten Auslaßbereichs vorsehen, könnte man nämlich die gesamte Innenwandung des Gehäusedeckels mit einer entsprechenden Wärmeisolation versehen. Insoweit könnte man die Wärmeisolation an der gesamten Innenwandung des Gehäusedeckels einheitlich handhaben bzw. im Falle einer Beschichtung dort einheitlich aufbringen.

Wie bereits zuvor erwähnt, könnte die Wärmeisolation in Form einer Auskleidung ausgeführt sein. Insoweit ist es von besonderem Vorteil, die Auskleidung innerhalb des Gehäusedeckels in Form eines losen Einlegeteils auszubilden, so daß dieses Einlegeteil den Strömungspfad für das Kältemittel begrenzt.

Zur weiterreichenden Reduzierung der Wärmeleitfähigkeit zwischen Gehäusedeckel und Kältemittel könnte die Auskleidung von der Innenwandung des Gehäusedeckels zumindest geringfügig beabstandet sein, so daß zwischen der eigentlichen Innenwandung des Gehäusedeckels und der Auskleidung ein Zwischenraum besteht. Dieser Zwischenraum reduziert den Wärmeübergang zwischen Gehäusedeckel und Kältemittel abermals.

Im Konkreten könnte die Auskleidung mit partiell ausgebildeten, vorzugsweise integralen Abstandshaltem an der Innenwandung des Gehäusedeckels anliegen, so daß der Abstand zwischen dem Einlegeteil und der Innenwandung des Gehäusedeckels aufgrund des einströmenden Kältemittels nicht verringert wird.

Im Rahmen einer weiteren Alternative könnte die Auskleidung bzw. Beschichtung als poröser Schaum ausgeführt sein, wodurch nämlich ein Gaspolster - innerhalb des Schaums - zu einer Verringerung des Wärmeübergangs zwischen Innenwandung des Gehäusedeckels und dem Kältemittel führt. Der Schaum sollte eine offene Porosität aufweisen, damit das Gefüge bei auftretenden Druckdifferenzen nicht zerstört wird.

Wie bereits zuvor erwähnt, könnte man die Innenwandung des Gehäusedeckels auch insgesamt beschichten, nämlich überall dort, wo der Strömungspfad des Kältemittels durch die Innenwandung des Gehäusedeckels definiert ist. Im Rahmen einer solchen Beschichtung ist es auch denkbar, dieser eine die Strömung begünstigende Oberflächenstruktur zu geben, so bspw. dort eine definierte Rauhigkeit vorzusehen, die die Oberflächenstruktur einer Haifischhaut aufweisen kann. Eine solche Maßnahme kann jedenfalls die Strömung innerhalb des Ansaugbereichs und des Auslaßbereichs begünstigen.

Ebenso ist es denkbar, die Innenwandung des Gehäusedeckels nur grob zu bearbeiten und die erforderliche Oberflächenstruktur durch die Beschichtung zu erzielen. So ließe sich bspw. auch eine für die Strömung des Kältemittels zu rauhe Oberfläche der Innenwandung des Gehäusedeckels mittels eines geeigneten Beschichtungsmaterials glätten.

Bei Kompressoren der hier in Rede stehenden Art grenzt der den Ansaugbereich und den Auslaßbereich umfassende Gehäusedeckel an eine Ventilplatte, so daß der Strömungspfad des Kältemittels zumindest teilweise zwischen der Ventilplatte und der Innenwandung des Gehäusedeckels definiert ist. Insoweit ist es von weiterem Vorteil, wenn die Wärmeisolation auch auf der Ventilplatte vorgesehen ist. Dazu könnte die Ventilplatte auf der dem Gehäusedeckel zugewandten Seite beschichtet sein, wie dies auch bei der Innenwandung des Gehäusedeckels der Fall sein kann.

Alternativ dazu ist es - wie bei der Innenwandung des Gehäusedeckels - auch möglich, die Ventilplatte auf der dem Gehäusedeckel zugewandten Seite mit einem losen Einlegeteil zu belegen, welches im übrigen auch zwischen der Ventilplatte und dem Gehäusedeckel zumindest im Randbereich und in Übergangsbereichen im Sinne einer Dichtung wirken kann.

Die voranstehenden Ausführungen beziehen sich auf eine Reduzierung der Wärmeleitfähigkeit zwischen der Innenwandung des Gehäusedeckels und dem Kältemittel. Eine Erwärmung des Kältemittels läßt sich weiter dadurch reduzieren, daß zusätzlich die den Strömungspfad bildenden oder an den Strömungspfad angrenzenden Flächen in der Pumpeneinheit mit einem eine geringe Leitfähigkeit aufweisenden Material beschichtet sind. Einer solchen Beschichtung könnten dabei gleich zwei Aufgaben zukommen, nämlich zum einen die angestrebte Reduzierung eines Wärmeübergangs zwischen den Bauteilen des Kompressors und dem Kältemittel und andererseits die Aufbringung einer Verschleißschutzschicht zur Verlängerung der Lebensdauer des Kompressors.

Sofern die Pumpeneinheit als Axialkolbenpumpe ausgebildet ist, könnte die Zylinderlauffläche im Zylinderblock mit dem eine geringe Leitfähigkeit aufweisenden Material beschichtet sein. Eine dort aufgebrachte Wärmeisolation, die gleichzeitig als Verschleißschutzschicht dient, ist aufgrund der dort üblicherweise auftretenden mechanischen Beanspruchung von ganz besonderem Vorteil.

Des weiteren ist es denkbar, die Kolbenoberfläche des Kolbens ebenfalls mit dem eine geringe Leitfähigkeit aufweisenden Material zu beschichten, wobei auch dort die Beschichtung gleichzeitig als Verschleißschutzschicht dient.

Ungeachtet der voranstehend erörterten Maßnahmen zur Reduzierung eines Wärmeübergangs zwischen Teilen des Kompressors und dem Kältemittel mittels Auskleidung oder Beschichtung könnte eine weitere Maßnahme zur Reduzierung des Wärmeübergangs darin liegen, daß der Gehäusedeckel selbst aus einem Material mit geringer Wärmeleitfähigkeit hergestellt ist. Dabei könnte der Gehäusedeckel aus einem Metall mit geringer Wärmeleitfähigkeit bestehen, so bspw. aus einem hochfesten Stahl, der gegenüber Aluminium eine doch erheblich geringere Wärmeleitfähigkeit aufweist. In ganz besonders vorteilhafter Weise ist der Gehäusedeckel aus einem keramischen Material oder einem keramischen Verbundwerkstoff hergestellt, wodurch der Wärmeübergang auch bereits ohne Beschichtung oder Auskleidung des Strömungspfades ganz erheblich reduziert ist.

Weitere Teile der Aufgabe werden gemäß weiterer Erfindungsmerkmale dadurch gelöst, daß bei einem Kompressor, dessen Verdichtereinheit über eine Antriebswelle und ein an die Antriebswelle gekoppeltes Antriebsrad von einem Riemen angetrieben wird, wobei das Antriebsrad einen mit dem Riemen in Eingriff stehenden Riemenscheibenkörper aufweist, der über eine Koppelungseinrichtung direkt oder indirekt mit der Antriebswelle gekoppelt ist, die Koppelungseinrichtung bei Überschreiten einer definierten thermischen und/oder mechanischen Belastbarkeitsgrenze zwangsweise entkoppelt.

Erfindungsgemäß ist insoweit erkannt worden, daß die Entkopplung zwangsweise zu erfolgen hat, und zwar bei Überschreiten einer definierten thermischen Belastbarkeitsgrenze, einer definierten mechanischen Belastbarkeitsgrenze oder bei Überschreiten wahlweise einer der beiden zuvor genannten Belastbarkeitsgrenzen. Letztendlich soll hier sichergestellt sein, daß eine zwangsweise Entkopplung auf jeden Fall stattfindet, wobei die Art der zu überschreitenden Belastbarkeitsgrenze sowie der Betrag der Belastbarkeit vorgebbar ist.

Damit soll auf jeden Fall vermieden werden, daß ein Blockieren der Verdichtereinheit bzw. der Antriebswelle zu einem Blockieren oder zu einer Beschädigung des Riemens führt. Letztendlich soll erreicht werden, daß auch bei Blockieren der Verdichtereinheit bzw. der Antriebswelle der Riemen mehr oder weniger ungehindert weiterlaufen kann, wobei eben nur der Kompressor aufgrund des eingetretenen Defekts außer Betrieb ist.

Im Konkreten könnte die beim ordnungsgemäßen Betrieb des Kompressors koppelnde Kopplungseinrichtung ein zwischen dem Riemenscheibenkörper und einer mit der Antriebswelle gekoppelten Kopplungsscheibe wirkendes Kopplungselement umfassen. Dieses Kopplungselement ist für die eigentliche Kopplung und somit für den Antrieb der Verdichtereinheit verantwortlich. Insbesondere auch im Hinblick auf eine geringe Baugröße ist es dabei von Vorteil, wenn das Kopplungselement zwischen der Innenfläche des Riemenscheibenkörpers und der Außenfläche der Kopplungsscheibe angeordnet ist, wobei in einem solchen Falle die beiden Flächen - Innenfläche des Riemenscheibenkörpers und Außenfläche der Kopplungsscheibe - koaxial zueinander angeordnet sind. Mit anderen Worten erstreckt sich der zur Aufnahme des Riemens dienende Riemenscheibenkörper im wesentlichen kreisringförmig um die Kopplungsscheibe, wobei sowohl der Riemenscheibenkörper als auch die Kopplungsscheibe zwei zueinander benachbarte und dabei parallel zueinander verlaufende Flächen aufweist. Dazwischen ist die Kopplungseinrichtung mit dem Kopplungselement angeordnet.

Des weiteren könnte zwischen dem Kopplungselement und der Kopplungsscheibe bzw. einem Antriebsflansch der Verdichtereinheit ein der Kopplungseinrichtung zugeordneter Schwingungsdämpfer zum Dämpfen der Drehschwingungen vorgesehen sein, wobei es sich dabei um ein Elastomerelement bzw. um ein Gummi-Metall-Element handeln kann. Insoweit kann die Kopplungseinrichtung einerseits das Kopplungselement und andererseits den Schwingungsdämpfer umfassen. Das zur Entkopplung dienende Bauteil ist jedoch das Kopplungselement.

Nun gibt es zahlreiche Möglichkeiten, das Kopplungselement im Konkreten auszugestalten, wobei das Kopplungselement eine definierte Entkopplung bei Überschreiten einer thermischen und/oder mechanischen Belastbarkeitsgrenze zu bewerkstelligen hat. Dazu könnte das Kopplungselement als Feder ausgebildet sein, die bei einer Temperatureinwirkung oberhalb eines vorgegebenen Temperaturgrenzwertes ihre elastische Federkraft zumindest teilweise verliert und dabei entkoppelt. Die durch Federkraft erreichte Kopplung wird somit durch ein quasi "Erlahmen" der Feder aufgehoben, wobei der Feder ohne weiteres auch eine Doppelfunktion insoweit zukommen kann, als die Feder auch eine Entkopplung bei Überschreiten einer mechanischen Belastbarkeitsgrenze zuläßt, nämlich im Sinne einer Rutschkopplung wirkt. Beide Funktionsweisen - Entkopplung bei Überschreiten einer thermischen und einer mechanischen Belastbarkeitsgrenze - sind möglich.

Ebenso ist es denkbar, das Kopplungselement als mit magnetischem Material des Riemenscheibenkörpers und der Kopplungsscheibe unmittelbar oder mittelbar zusammenwirkender Permanetmagnet auszuführen. Dieser Permanentmagnet müßte bei Temperatureinwirkung oberhalb eines vorgegebenen Grenzwertes seine magnetische Wirkung zumindest teilweise verlieren und dabei entkoppeln. Insoweit wäre die Entkopplung bei Überschreiten einer definierbaren thermischen Belastbarkeitsgrenze gewährleistet.

Die Vorkehrung einer magnetisch arbeitenden Kopplungseinrichtung könnte auch ein formschlüssiges Koppeln bewerkstelligen, nämlich dadurch, daß das Kopplungselement formschlüssig koppelnde magnetische Kopplungsteile sowie einen zumindest schwachen Elektromagneten umfaßt, der bei detektiertem Blockieren der Antriebswelle die Kopplungsteile außer Eingriff bringt und dabei entkoppelt. Eine solche Vorkehrung bietet sich zumindest dann an, wenn der Kompressor elektrisch geregelt ist, wenn sich also das Blockieren des Kompressors ohne weiteres feststellen läßt.

Im Rahmen einer ganz besonders vorteilhaften Ausgestaltung ist das Kopplungselement im Sinne eines kreisringförmig ausgebildeten Druckkörpers zur kraftschlüssigen Kopplung zwischen dem Riemenscheibenkörper und der Kopplungsscheibe bzw. der Antriebswelle ausgeführt. Dieser Druckkörper bewirkt aufgrund seines zwischen die Bauteile gepreßten Zustandes eine kraftschlüssige Kopplung, wobei im Falle der zusätzlichen Vorkehrung eines Schwingungsdämpfers das Kopplungselement und somit der Druckkörper zwischen dem Riemenscheibenkörper und dem Schwingungsdämpfer angeordnet ist. Jedenfalls wirkt der Druckkörper zwischen dem Riemenscheibenkörper und der Antriebswelle, und zwar jeweils über diejenigen Bauteile, die in funktionaler Hinsicht dazwischen angeordnet sind.

Im Konkreten könnte der Druckkörper als Balg, vorzugsweise als dünnwandiger Metallbalg, ausgeführt sein. Eine dünnwandige Ausgestaltung wäre insoweit von Vorteil, als sich dieser durch ein Strömungsmedium räumlich ausdehnen ließe. Der Druckkörper könnte nämlich zur kraftschlüssigen Kopplung mit einem unter vorgebbaren Druck stehenden Strömungsmedium gefüllt sein, wobei es sich bei dem Strömungsmedium um ein Gas, eine Flüssigkeit oder zumindest teilweise um eine Flüssigkeit und ansonsten um Gas handeln kann. Jedenfalls bewerkstelligt der Druckkörper im druckbeaufschlagten Zustand eine Zwangskopplung, so daß der Kompressor über den Riemenscheibenkörper drehangetrieben wird.

Nun ist es möglich, bei Vorkehrung des zuvor genannten Druckkörpers die Entkopplung bei Überschreiten einer definierten thermischen und/oder mechanischen Belastbarkeitsgrenze zu bewerkstelligen. So könnte das Strömungsmedium einen derart hohen thermischen Ausdehnungskoeffizienten aufweisen, daß es den Druckkörper bei Überschreiten einer vorgegebenen Temperatur aufgrund des dann herrschenden Innendrucks zumindest bereichsweise öffnet oder gar zum Platzen bringt und dabei entkoppelt. Dies setzt auf jeden Fall voraus, daß der Riemen über den Riemenscheibenkörper hinwegrutscht, diesen dabei auf in der Praxis bis etwa 300°C erwärmt und die Temperatur an den unmittelbar an der Innenfläche des Riemenscheibenkörpers anliegenden Druckkörper weitergibt. Jedenfalls führt die Temperaturerhöhung zu einer solchen Ausdehnung des Strömungsmediums, daß der Druckkörper leckt oder gar platzt, wodurch der Druck entweichen kann und wodurch letztendlich der Druckkörper den zur Zwangskopplung zwischen Riemenscheibenkörper und Antriebswelle bzw. Kopptungsscheibe erforderlichen Anpreßdruck nicht mehr aufbringt. Eine Entkopplung ist somit bei Überschreitung eines thermischen Grenzwertes erreicht.

Ebenso ist es denkbar, daß der Druckkörper mindestens eine zur Druckentlastung und somit zur Entkopplung dienende mechanische Sollbruchstelle aufweist. Dazu könnte eine Sollbruchstelle aufreißen, so daß der innerhalb des Druckkörpers herrschende Druck bzw. das dort vorhandene Strömungsmedium entweichen kann. Hier ist es jedoch erforderlich, daß die zum Aufreißen erforderliche Kraft geringer ist als diejenige Kraft, mit der der Druckkörper in seiner Position relativ zu der Kopplungsscheibe oder zu dem dazwischen angeordneten Schwingungsdämpfer durch Haftreibung, Adhäsion oder dergleichen gehalten wird. Insoweit wäre die Entkopplung bei Überschreiten einer mechanischen Belastbarkeitsgrenze gewährleistet.

Ebenso könnte der Druckkörper zumindest eine zur Druckentlastung und somit zur Entkopplung dienende Schmelzsicherung aufweisen, die ungeachtet eines etwaigen Druckanstiegs innerhalb des Druckkörpers bei Erreichen einer vorgebbaren Temperatur schmilzt und das Druckmedium freigibt. In besonders vorteilhafter Weise sind entlang des Umfanges des Druckkörpers mehrere Schmelzsicherungen vorgesehen, so daß unabhängig der Winkelposition der Riemenscheibe bzw. des Riemenscheibenkörpers mindestens eine Schmelzsicherung in der Nähe des aufgrund eines Durchrutschens des Riemens heißlaufenden Bereichs der Riemenscheibe angeordnet ist. Jedenfalls ist auch hierdurch eine zwangsweise Entkopplung geschaffen, und zwar durch Überschreiten einer definierten thermischen Belastbarkeitsgrenze.

Da eine Fehlfunktion des Kompressors sowohl zu einem Durchrutschen des Riemens und somit zu einer enormen Erwärmung des Riemenscheibenkörpers als auch zu einem vollständigen Blockieren des Riemens und somit zu einem Abwürgen des Antriebsmotors oder gar zu einer Zerstörung des Riemens führen kann, ist es von Vorteil, die beiden zuvor genannten Entkopplungsmechanismen miteinander zu kombinieren, nämlich dahingehend, daß der Druckkörper mindestens eine zur Druckentlastung dienende mechanische Sollbruchstelle und mindestens eine zur Druckentlastung dienende Schmelzsicherung zur Entkopplung aufweisen kann. Dabei sollte sichergestellt sein, daß der Druckkörper stoffschlüssig, zumindest aber mit hohem Haftreibungskoeffizienten in seiner Position gehalten ist, so daß bei entsprechender mechanischer Belastung die Sollbruchstelle auch tatsächlich aufreißt.

Hinsichtlich einer konkreten Ausgestaltung des Druckkörpers ist es von weiterem Vorteil, wenn sich dieser zwischen der Innenfläche des Riemenscheibenkörpers und der Außenfläche der Kopplungsscheibe oder eines Schwingungsdämpfers kreisringförmig, vorzugsweise im Sinne eines Hohlzylinders, erstreckt. Mit anderen Worten erstreckt sich der Druckkörper ringförmig zwischen dem Riemenscheibenkörper und der Kopplungsscheibe, und zwar zwischen den beiden Innenflächen der hier in Rede stehenden, miteinander zu koppelnden Bauteile. Der dort vorsehbare Schwingungsdämpfer kann als quasi Zwischenelement dienen, hat jedoch in funktionaler Hinsicht mit der Kopplung bzw. Entkopplung nichts zu tun.

Im Längsschnitt durch den Kompressor bzw. den Druckkörper könnte dieser einen im wesentlichen rechtwinkligen Druckraum aufweisen, wobei sich an diesen rechtwinkligen Druckraum - im Längsschnitt - gegenüber dem Druckraum verjüngte, nach außen gerichtete Trennbereiche des Druckkörpers anschließen. Diese Trennbereiche weisen eng benachbarte Wandungen auf, die aufgrund deren Nähe zueinander mit einer Schmelzsicherung insgesamt, zonal oder punktuell geschlossen sind. Eine Verbindung der Wandungen in den Trennbereichen läßt sich auch im Sinne einer Sollbruchstelle ausgestalten.

Insbesondere bei Kombination einer zwangsweisen Entkopplung sowohl bei Überschreiten einer definierten thermischen als auch bei Überschreiten einer definierten mechanischen Belastbarkeitsgrenze ist es von Vorteil, wenn zwei einander gegenüberliegende Trennbereiche ausgebildet sind, die sich im Längsschnitt des Druckkörpers U-förmig mit ihren Schenkeln an den Druckraum anschließen, wobei eben der eine Trennbereich zur Entkopplung bei Überschreiten einer definierten thermischen Belastbarkeitsgrenze und der andere Trennbereich bei Überschreiten einer definierten mechanischen Belastbarkeitsgrenze dient. Dabei handelt es sich bei dem einen Trennbereich um eine Schmelzsicherung und bei dem anderen Trennbereich um eine mechanische Sollbruchstelle, wobei sowohl die Schmelzsicherung als auch die Sollbruchstelle entlang des gesamten Umfangs des Druckkörpers kontinuierlich, zonal oder lediglich punktuell vorgesehen sein kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung anhand der Zeichnungen werden auch im allgemeinen bevorzugte Ausgestaltungen und Weiterbildungen der Lehre erläutert. In der Zeichnung zeigt
- Fig. 1: in einem schematischen Längsschnitt ein Ausführungsbeispiel eines erfindungsgemäßen Kompressors, wobei die als Schwenkscheibe ausgeführte Antriebsscheibe um das durch einen Anschlag definierte Mindestmaß geneigt bzw. geschwenkt ist,
- Fig. 2: den Gegenstand aus Fig. 1, wobei die Schwenkscheibe entsprechend einem das maximale Verschwenken definierenden Anschlag geneigt ist,
- Fig. 3: den Gegenstand aus Fig. 1 im Querschnitt entlang der Linie B-B,
- Fig. 4: in einem schematischen Längsschnitt ein weiteres Ausführungsbeispiel eines erfindungsgemäßen Kompressors, wobei dort die Verdichtungseinheit lediglich angedeutet ist,
- Fig. 5: in einer schematischen Detailansicht die Wirkverbindung zwischen Antriebswelle und Kolben, wobei die Schwenkscheibe maximal verschwenkt ist,
- Fig. 6: den Gegenstand aus Fig. 5, wobei die Schwenkscheibe um das Mindestmaß geneigt bzw. geschwenkt ist,
- Fig. 7: in einer schematischen Draufsicht, teilweise, die Anlenkung zwischen Antriebswelle und Kolben nebst Schwenkscheibe,
- Fig. 8: ein weiteres Ausführungsbeispiel eines erfindungsgemäßen Kompressors im Detail gemäß der Darstellung in Fig. 6, wobei dort zwischen dem Kolben und einer Taumelscheibe ein Gleitlager wirkt,
- Fig. 9: in einer schematischen Draufsicht einen Niederhalter, wie er bei dem in Fig. 8 dargestellten Ausführungsbeispiel verwendet wird.
- Fig. 10: in einer schematischen Seitenansicht, teilweise und geschnitten ein weiteres Ausführungsbeispiel eines erfindungsgemäßen Kompressors, wobei dort lediglich der Ansaugbereich und der Auslaßbereich im Gehäusedeckel dargestellt sind,
- Fig. 11: in einer vergrößerten Seitenansicht, geschnitten, den Ansaugbereich im Gehäusedeckel, wobei dort eine zur Innenwandung des Gehäusedeckels beabstandete Auskleidung als Wärmeisolation vorgesehen ist,
- Fig. 12: in einem schematischen Längsschnitt ein Ausführungsbeispiel eines gattungsbildenden Kompressors mit den wesentlichen Bauteilen,
- Fig. 13: in einem schematischen Längsschnitt, teilweise, ein Ausführungsbeispiel eines erfindungsgemäßen Kompressors mit besonderer Riemenscheibenvorrichtung,
- Fig. 14: den Gegenstand aus Fig. 2 im Detail "X" in vergrößerter Darstellung,
- Fig. 15: in einem schematischen Längsschnitt, teilweise, ein zweites Ausführungsbeispiel eines erfindungsgemäßen Kompressors mit besonderer Riemenscheibenvorrichtung und
- Fig. 16: den Gegenstand aus Fig. 15 im Detail "Y" in vergrößerter Darstellung.

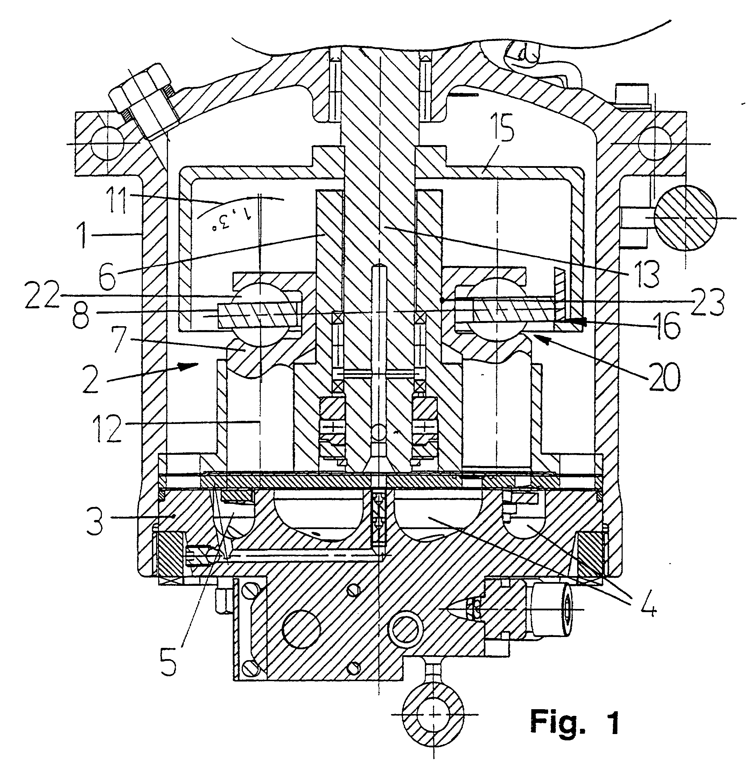

Die Fig. 1 bis 3 zeigen einen Kompressor für die Klimaanlage eines Kraftfahrzeugs. Der Kompressor umfaßt ein Gehäuse 1 und eine in dem Gehäuse 1 angeordnete Verdichtungseinheit 2 zum Ansaugen und Verdichten eines Kältemittels, wobei es sich bei dem Kältemittel bevorzugt um CO₂ handeln kann.

Das Kältemittel strömt von einem in einem stimseitigen Gehäusedeckel 3 ausgebildeten Ansaugbereich 4 durch die Verdichtereinheit 2 hindurch in den ebenfalls im Gehäusedeckel 3 ausgebildeten Auslaßbereich 5.

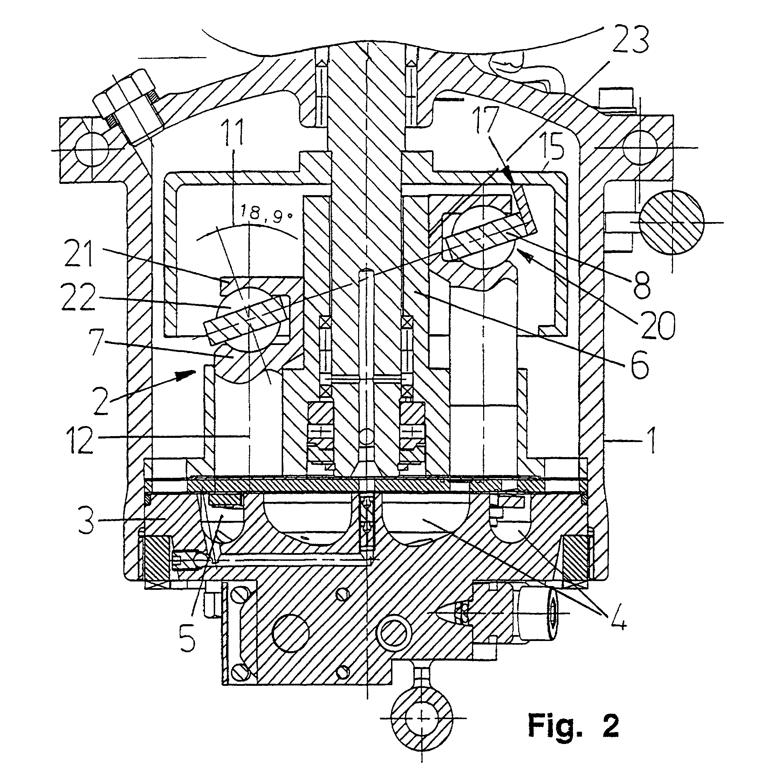

Die Fig. 1 und 2 zeigen besonders deutlich die im Gehäuse 1 angeordnete Verdichtereinheit 2 zum Ansaugen und Verdichten des Kältemittels, wobei die Verdichtereinheit 2 in einem Zylinderblock 6 laufende Kolben 7 und eine die Kolben 7 antreibende Antriebsscheibe umfaßt, wobei es sich hier im Konkreten um eine Schwenkscheibe 8 handelt.

Erfindungsgemäß ist die Schwenkscheibe 8 derart gelagert, daß die Mittellinie 9 der Lagerung, d.h. die Schwenk- oder Lagerachse der Schwenkscheibe 8, eine Tangente des den Hub definierenden Teilkreises 10 bildet, so daß der Neigungswinkel 11 der Schwenkscheibe 8 veränderbar ist, ohne den Totpunkt über der Hubstellung zu verschieben. Die Fig. 1 und 2 zeigen jedenfalls gemeinsam, daß die Schwenkscheibe 8 genau über der Kolbenlängsachse 12 kippt, daß nämlich der Momentanpol auf dem Teilkreis 10 liegt und dabei bezogen auf das rotierende Bezugssystem der Antriebswelle 13 ortsfest ist.

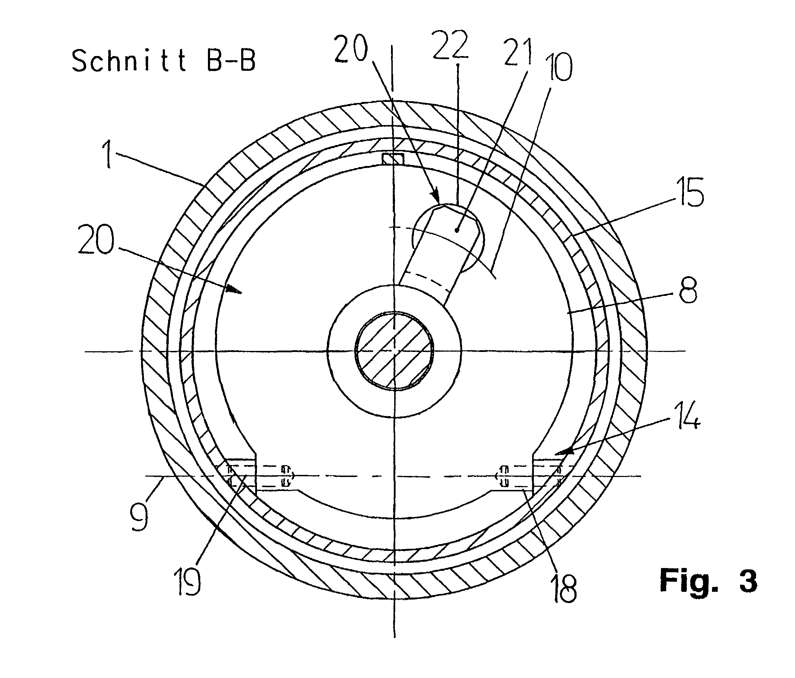

Fig. 3 zeigt deutlich, daß die Schwenkscheibe 8 über eine deren Randbereich zugeordnete Gelenkvorrichtung 14 mit der Antriebswelle 13 wirkverbunden ist. Dazu ist die Schwenkscheibe 8 an einen mit der Antriebswelle 13 drehfest verbundenen Mitnahmekörper 15 angelenkt, wobei es sich bei dem Mitnahmekörper 15 um einen trommelartigen Körper handelt, welcher gleichzeitig einen Anschlag 16, 17 für die Schwenkbewegung der Schwenkscheibe 8 bildet. Dies läßt sich insbesondere den Fig. 1 und 2 entnehmen, wobei in Fig. 1 der Anschlag 16 für die minimale Verschwenkung und in Fig. 2 der Anschlag 17 für die maximate Verschwenkung der Schwenkscheibe 8 - mit der jeweiligen Position der Schwenkscheibe 8 - dargestellt ist.

Fig. 3 zeigt des weiteren, daß die Schwenkscheibe 8 über ein zwischen der Schwenkscheibe 8 und dem Mitnahmekörper 15 wirkendes Schwenklager 18 gelagert ist, wobei dieses Schwenklager 18 Lagerstifte 19 umfaßt, die in den Mitnahmekörper 15 zur schwenkbaren Anlenkung der Schwenkscheibe 8 greifen.

Den Fig. 1 bis 3 läßt sich insgesamt entnehmen, daß zwischen der Schwenkscheibe 8 und den Kolben 7 Kopplungsmittel 20 wirken, die einen dem Kolben 7 zugeordneten Umgriff 21 und einen der Schwenkscheibe 8 zugeordneten Gleitschuh bzw. Kugelkörper 22 umfassen. Dabei durchdringt der Umgriff 21 des Kolbens 7 auf der der Antriebswelle 13 zugewandten Seite die Schwenkscheibe 8 und erstreckt sich von dort nach außen, und zwar unter Einbeziehung des Kugelkörpers 22. Dabei wird der Kugelkörper 22 zumindest teilweise umgriffen.

In Fig. 1 bis 3 ist lediglich angedeutet, daß der Zylinderblock 6 eine Verdrehsicherung für den Kolben 7 umfaßt, nämlich in Form einer Abstützfläche 23 zwischen Zylinderblock 6 und den Kolben 7.

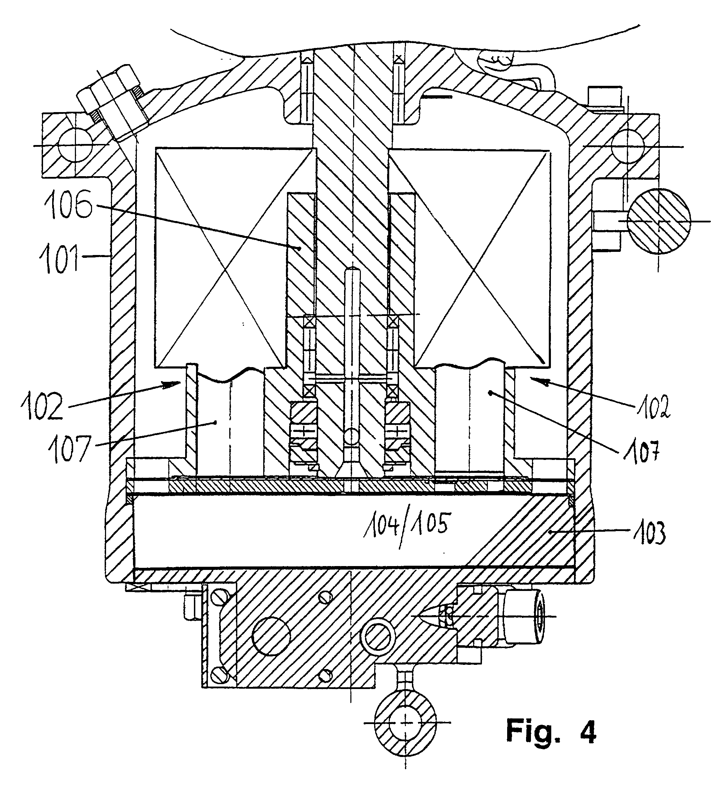

Fig. 4 zeigt einen Kompressor für die Klimaanlage eines Kraftfahrzeugs. Der Kompressor umfaßt ein Gehäuse 101 und eine in dem Gehäuse 101 angeordnete, in Fig. 4 lediglich angedeutete Verdichtereinheit 102 zum Ansaugen und Verdichten eines Kältemittels, wobei es sich bei dem Kältemittel bevorzugt um CO₂ handeln kann.

Das Kältemittel strömt von einem in einem stimseitigen Gehäusedeckel 103 ausgebildeten Ansaugbereich 104 durch die Verdichtereinheit 102 hindurch in den ebenfalls im Gehäusedeckel 103 ausgebildeten Auslaßbereich 105.

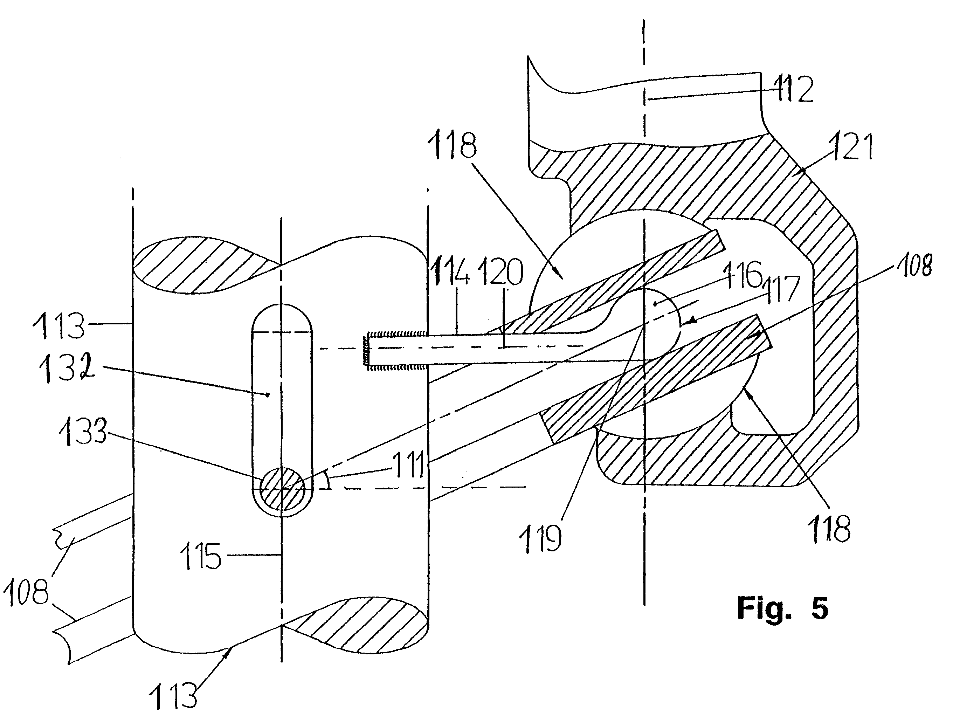

Fig. 4 zeigt lediglich andeutungsweise die im Gehäuse 101 angeordnete Verdichtereinheit 102 zum Ansaugen und Verdichten des Kältemittels, wobei die Verdichtereinheit 102 in einem Zylinderblock 106 laufende Kolben 107 und eine die Kolben 107 antreibende Antriebsscheibe umfaßt, die in Fig. 4 nicht dargestellt ist. Dabei handelt es sich im Konkreten um eine Schwenkscheibe 108 (vgl. Fig. 5 bis 8).

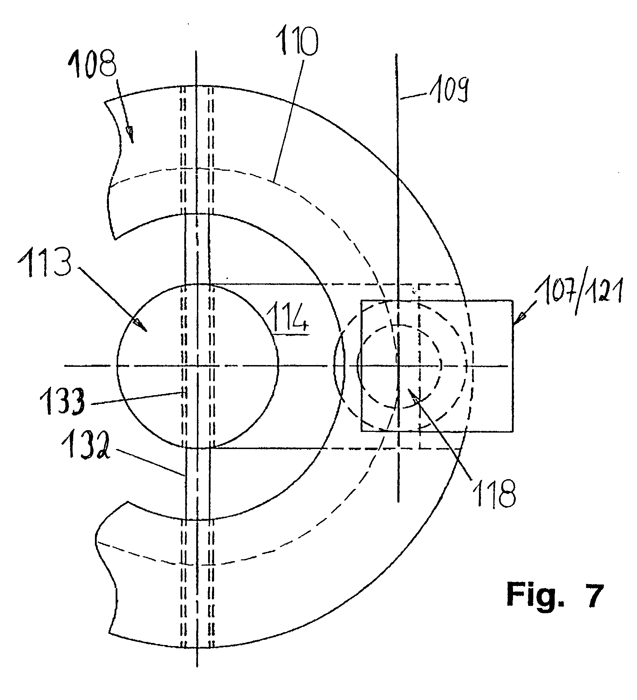

Erfindungsgemäß ist die in den Fig. 5 bis 8 dargestellte Schwenkscheibe 108 derart gelagert, daß die Mittellinie 109 der Lagerung, d.h. die Schwenk- oder Lagerachse der Schwenkscheibe 108, eine Tangente des den Hub definierenden Teilkreises 110 bildet (vgl. Fig. 7), so daß der Neigungswinkel 111 der Schwenkscheibe 108 veränderbar ist, ohne den oberen Totpunkt über der Hubstellung zu verschieben. Die Fig. 5 bis 8 zeigen jedenfalls gemeinsam, daß die Schwenkscheibe 108 genau über der Kolbenlängsachse 112 kippt, daß nämlich der Momentanpol auf dem Teilkreis 110 liegt und dabei bezogen auf das rotierende Bezugssystem der Antriebswelle 113 ortsfest ist.

Die Fig. 5 bis 8 zeigen deutlich, daß die Antriebsscheibe bzw. Schwenkscheibe 108 über einen mit der Antriebswelle 113 fest verbundenen, in der Schwenkscheibe 108 in deren Randbereich gleitend gelagerten Führungsarm 114 mit der Antriebswelle 113 wirkverbunden ist. Die Fig. 5 bis 8 lassen des weiteren gemeinsam erkennen, daß der Führungsarm 114 als Vierkant ausgebildet ist und orthogonal zu der Längsachse 115 der Antriebswelle 113 angeordnet ist. Bei den hier gezeigten Ausführungsbeispielen ist der Führungsarm 114 in die Antriebswelle 113 eingepreßt.

Die Fig. 5, 6 und 8 zeigen besonders deutlich, daß zur gleitenden Lagerung des Führungsarms 114 in der Schwenkscheibe 108 am freien Ende des Führungsarms 114 ein Führungskörper 116 ausgebildet ist. Der Führungskörper 116 ist quer zur Längsachse des Führungsarms 114 im wesentlichen zylindrisch ausgeführt.

Bei den hier gezeigten Ausführungsbeispielen ist der Führungskörper 116 direkt in der Schwenkscheibe 108 gelagert. Eine indirekte Lagerung über sonstige Lager/Gleitmechanismen ist denkbar. Jedenfalls dient der Führungskörper 116 mit seiner Mantelfläche 117 zur gleitenden Anlage an gegenüberliegenden Innenwandungen der Schwenkscheibe 108, was in den Fig. 5, 6 und 8 besonders gut zu erkennen ist.

Bei dem in den Fig. 5, 6 und 7 gezeigten Ausführungsbeispiel sind im Wirkbereich des Führungskörpers 116 beidseits der Schwenkscheibe 108 zum schwenkbaren Eingriff in den Kolben 107 dienende Kugelsegmente 118 vorgesehen. Der Mittelpunkt 119 der durch die beiden Kugelsegmente 118 gebildeten Kugel liegt im Mittelpunkt des zylindrischen Führungskörpers 116 bzw. auf dessen Längsachse 120.

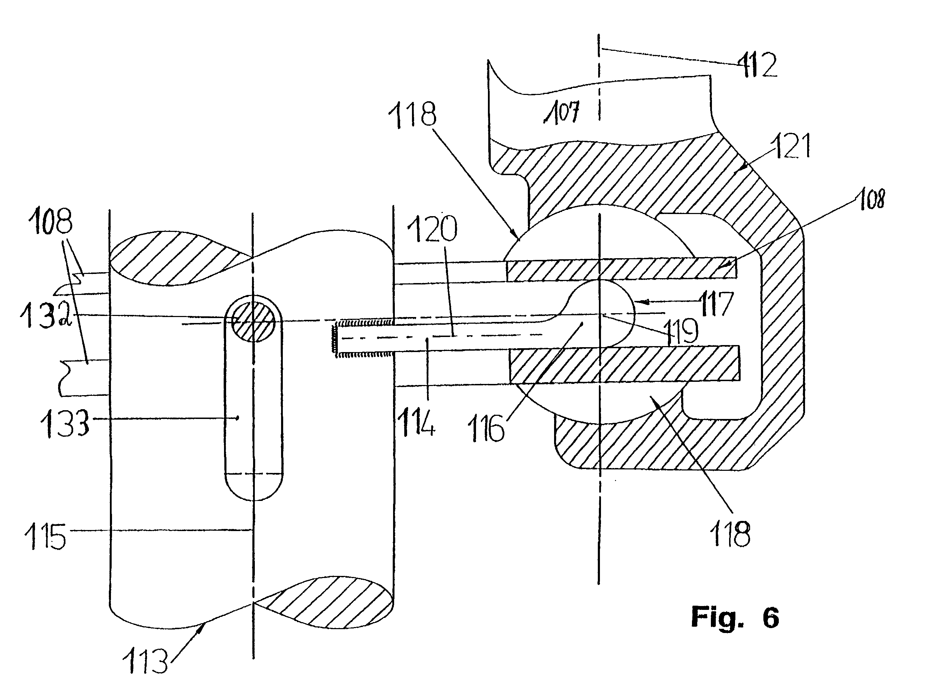

Die Fig. 5 und 6 zeigen weiter, daß der Kolben 107 mit seinem Anschlußbereich 121 um das freie Ende der Schwenkscheibe 108 auf die Kugelsegmente 118 greift. Dabei ist der Anschlußbereich 121 im Querschnitt C-förmig ausgebildet, so daß ein Umgriff des freien Endes der Schwenkscheibe 108 möglich ist.

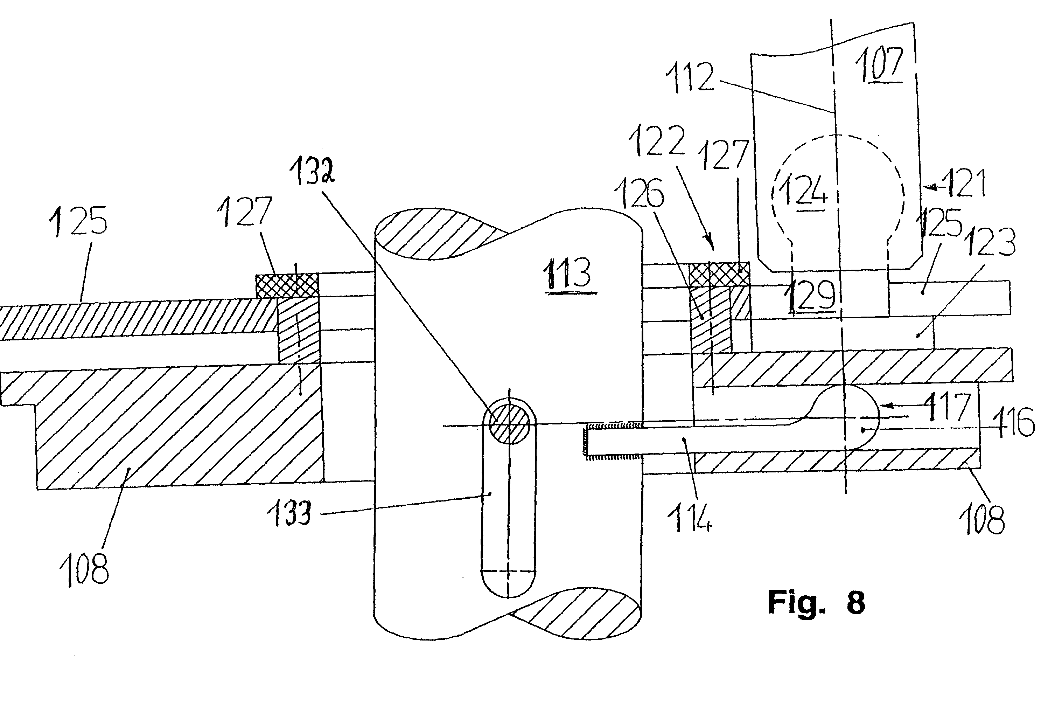

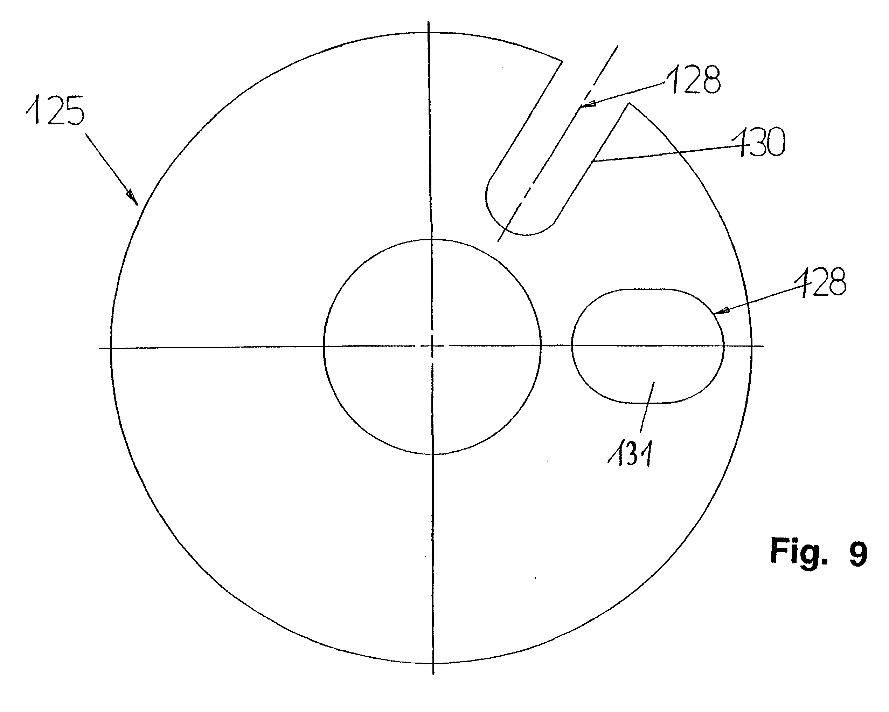

Fig. 8 und 9 zeigen ein weiteres Aufsührungsbeispiel eines erfindungsgemäßen Kompressors, wobei dort lediglich Details zu erkennen sind, wie sie auch in den Fig. 5 und 6 bezogen auf das vorangegangene Ausführungsbeispiel dargestellt sind. Danach ist die Schwenkscheibe 108 über ein Gleitlager 122 mit dem einen endseitigen Gleitschuh 123 aufweisenden Kolben 107 wirkverbunden. Der Kolben 107 ist als zylindrischer Vollkörper ausgeführt, wobei der Gleitschuh 123 mittels Kugelgelenk 124 mit dem Kolben 107 verbunden ist. Ein Kippen des Gleitschuhs 123 ist somit möglich.

Im Konkreten ist der Gleitschuh 123 mittels eines Niederhalters 125 auf der Schwenkscheibe 108 gehalten bzw. auf die Schwenkscheibe 108 aufgedrückt. Der Niederhalter 125 ist gemäß der Darstellung in Fig. 9 in Form einer Scheibe ausgeführt und drehfest angeordnet. Zwischen dem Niederhalter 125, dem Gleitschuh 123 und der Schwenkscheibe 108 wirkt das Gleitlager 122, wobei das Gleitlager 122 einen sich zwischen der Schwenkscheibe 108 und dem Niederhalter 125 erstreckenden Distanzring 126 und eine sich an den Distanzring 126 anschließende, sich teilweise über den Niederhalter 125 erstreckende Niederhalterführung 127 umfaßt.

In Fig. 9 ist lediglich angedeutet, daß der Niederhalter 125 der Anzahl der Kolben 107 entsprechende Durchgänge 128 für den Kolben 107 bzw. für eine Verbindung 129 zwischen dem Kugelgelenk 124 und dem Gleitschuh 123 aufweist. Der Durchgang 128 kann sowohl als am Rande des Niederhalters 125 auslaufender Schlitz 130 oder als seitlich geschlossenes und insoweit die Steifigkeit des Niederhalters 125 begünstigenden Langloch 131 ausgebildet sein.

Weiter zeigen die Fig. 5 bis 8 deutlich, daß zur axialen Führung der Schwenkscheibe 108 ein fest mit der Schwenkscheibe 108 verbundener Führungsstift 131 in ein in der Schwenkscheibe 108 ausgebildetes Langloch 132 greift, wobei sich der Führungsstift 131 durch das Langloch 132 hindurch erstreckt und beidseits der Schwenkscheibe 108 mit der Schwenkscheibe 108 verbunden ist. Dies läßt besonders deutlich Fig. 7 erkennen.

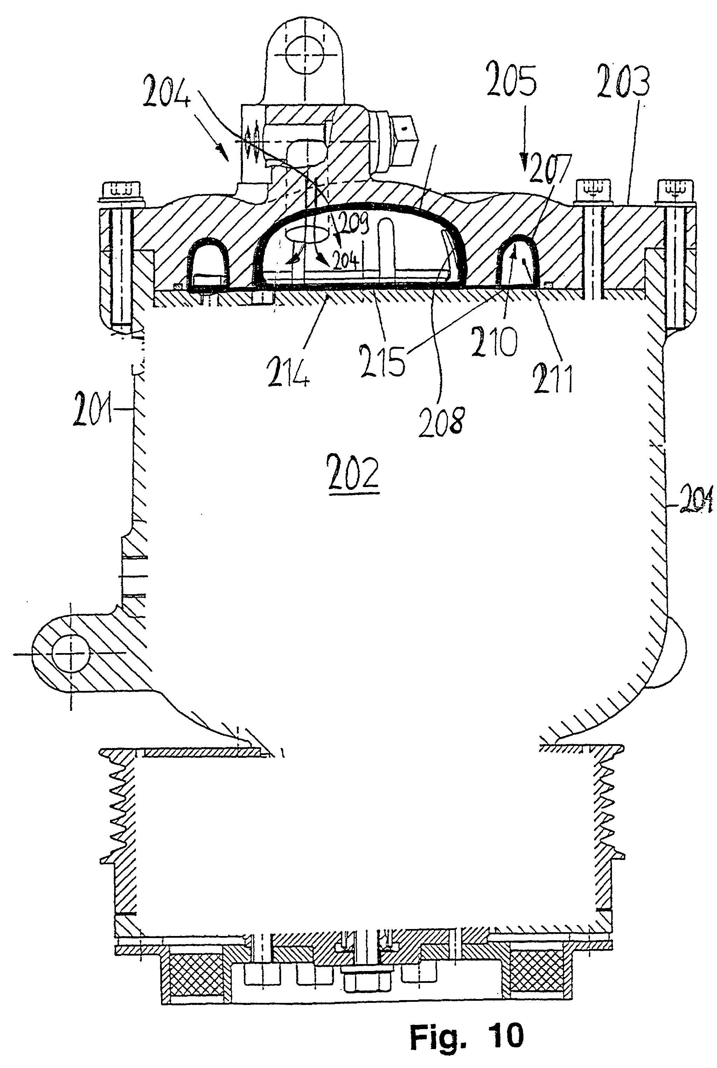

Fig. 10 zeigt einen Kompressor für die Klimaanlage eines Kraftfahrzeugs. Der Kompressor umfaßt ein Gehäuse 201 und eine in dem Gehäuse 201 angeordnete Verdichtungseinheit 202 zum Ansaugen und Verdichten eines Kältemittels, wobei es sich bei dem Kältemittel um CO₂ handeln kann.

Das Kältemittel strömt von einem in einem stirnseitigen Gehäusedeckel 203 ausgebildeten Ansaugbereich 204 durch die Verdichtereinheit 202 hindurch in den ebenfalls im Gehäusedeckel 203 ausgebildeten Auslaßbereich 205.

Erfindungsgemäß sind die mit dem Kältemittel in Berührung kommenden Bauteile des Kompressors, nämlich die den Strömungspfad 206 zwischen Ansaugbereich 204 und Auslaßbereich 205 bildenden Wandungen, gegenüber dem Kältemittel zumindest bereichsweise wärmeisoliert.

Bei dem in Fig. 10 dargestellten Ausführungsbeispiel ist die Wärmeisolation 207 als Beschichtung aus einem eine geringe Wärmeleitfähigkeit aufweisenden Material ausgeführt, wobei die Wärmeisolation 207 sowohl an der Innenwandung 208 des Ansaugkanals 209 als auch an der Innenwandung 210 des Auslaßkanals 211 vorgesehen ist. Genauergesagt sind die gesamten Innenwandungen 208, 210 des Ansaugbereichs 204 und des Auslaßbereichs 205 wärmeisolierend beschichtet, wobei dazu letztendlich die gesamte Innenwandung 208, 210 des Gehäusedeckels 203 beschichtet ist.

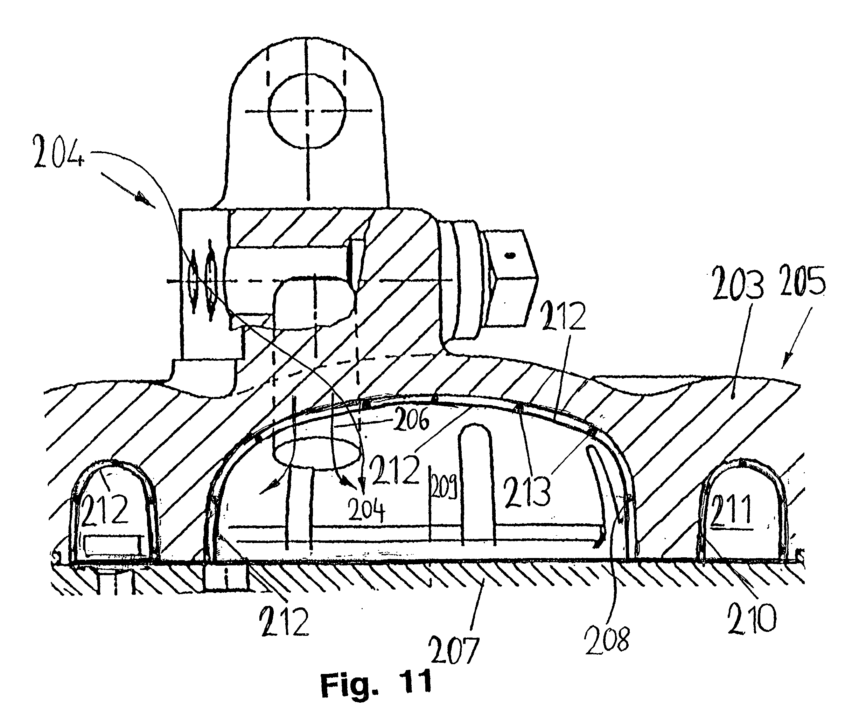

Bei dem in Fig. 11 teilweise und dabei schematisch dargestellten Ausführungsbeispiel ist für den Ansaugbereich 204 angedeutet, daß dort die Innenwandung 208, 210 des Gehäusedeckels 203 ausgekleidet ist, nämlich in Form eines losen Einlegeteils 212. Dieses Einlegeteil 212 ist von der Innenwandung 208, 210 geringfügig beabstandet, wobei diese Beabstandung durch integrale Abstandshalter 213 zustande kommt. Die Abstandshalter 213 liegen an der Innenwandung 208, 210 des Gehäusedeckels 203 unmittelbar an.

Fig. 10 läßt des weiteren erkennen, daß der Gehäusedeckel 203 an eine Ventilplatte 214 angrenzt. Auch auf der Ventilplatte 214 ist eine Wärmeisolation 215 vorgesehen, wobei dort die Ventilplatte 214 auf der dem Gehäusedeckel 203 zugewandten Seite beschichtet ist, und zwar vorzugsweise mit dem gleichen Material wie die Innenwandung 208, 210 des Gehäusedeckels 203. Insoweit ist der zwischen Gehäusedeckel 203 und Ventilplatte 214 gebildete Strömungsfpad insgesamt beschichtet und somit wärmeisoliert.

Hinsichtlich der wärmeisolierenden und verschleißfesten Beschichtung weiterer Bauteile des Kompressors wird zur Vermeidung von Wiederholungen auf den allgemeinen Teil der Beschreibung verwiesen. Gleiches gilt für das Material des Gehäusedeckels 203.

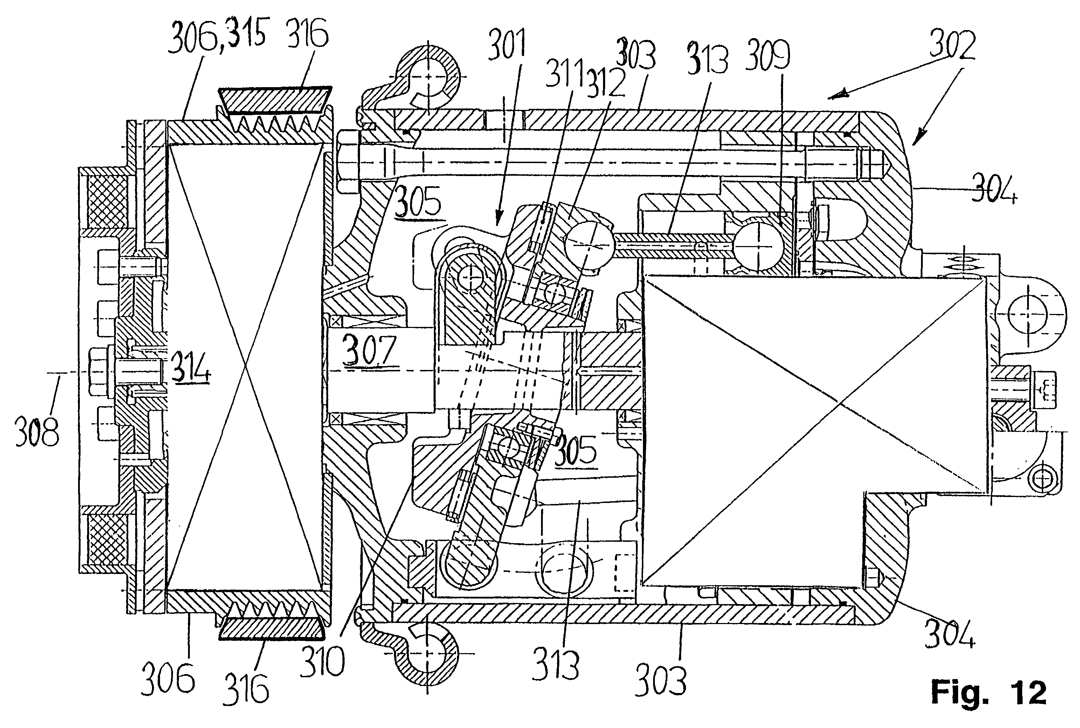

Bei dem in Fig. 12 lediglich beispielhaft gezeigten Ausführungsbeispiel eines gattungsbildenden Kompressors handelt es sich um einen Axialkolbenverdichter, wobei die hier nicht näher beschriebene Verdichtereinheit 301 in einem Gehäuse 302 angeordnet ist. Das Gehäuse 302 umfaßt im wesentlichen zwei Gehäuseteile 303, 304, wobei das Gehäuseteil 303 einen sog. Triebraum 305 bildet, in dem die Verdichtereinheit 301 angeordnet ist.

Die Verdichtereinheit 301 wird über eine Riemenscheibe 306 beispielsweise von einem Verbrennungsmotor angetrieben. Der Antrieb erfolgt von dort aus über eine Antriebswelle 307, die um eine Drehachse 308 rotiert. Die Antriebswelle 307 ist in dem Gehäuse 302 und im Bereich der Riemenscheibe 306 drehgelagert.

Zum Antrieb der Kolben 309 ist eine Taumelscheibe 310 vorgesehen, die über Lager 311 auf eine drehfest im Gehäuse 302 gelagerte Aufnahmescheibe 312 wirkt. Die Aufnahmescheibe 312 ist über eine Pleuelstange 313 mit dem bzw. den Kolben 309 gekoppelt. Entsprechend dieser Anordnung bewegt sich der Kolben 309 bei einer Drehung der Taumelscheibe 310 über die Aufnahmescheibe 312 in Richtung seiner Längsachse hin und her, wobei das hier dargestellte Ausführungsbeispiel gleich mehrere Kolben 309 umfaßt.

Da es sich bei dem hier dargestellten Kompressor um einen Kompressor für die Klimaanlage eines Kraftfahrzeugs handelt, wird dieser über die hier nicht gezeigte Brennkraftmaschine eines Kraftfahrzeugs angetrieben, wobei über eine geeignete Riemenscheibe, die mit der Kurbelwelle der Brennkraftmaschine gekoppelt ist, ein Antriebsmoment in ein Antriebsrad 314 des Kompressors eingeleitet wird. Dieses Antriebsrad 314 umfaßt einen Riemenscheibenkörper 315, über den der Riemen 316 geführt wird.

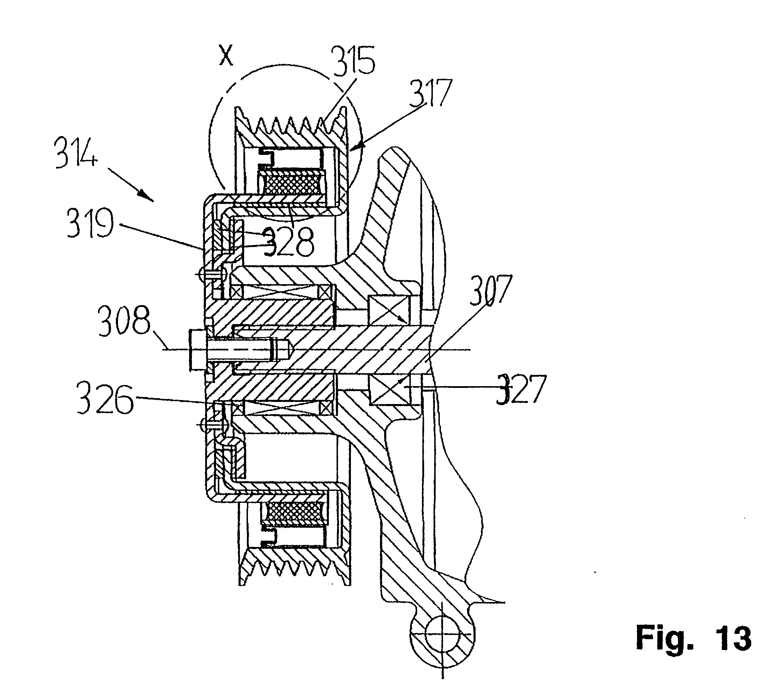

Gemäß der Darstellung in Fig. 12 ist angedeutet, daß der Riemenscheibenkörper 315 durch den Riemen 316 in eine Drehbewegung verbracht wird. Das in den Riemenscheibenkörper 315 eingeleitete Drehmoment wird - bei den in den Figuren 13 bis 16 gezeigten Ausführungsbeispielen - über eine Kopplungseinrichtung 317 auf die Antriebswelle 307 übertragen, wobei die Kopplungseinrichtung 317 - bei den hier gewählten Ausführungsbeispielen - einen Schwingungsdämpfer 318 umfaßt.

In erfindungsgemäßer Weise ist die Kopplungseinrichtung 317 derart konzipiert, daß bei Überschreiten einer definierten thermischen und/oder mechanischen Belastbarkeitsgrenze diese zwangsweise entkoppelt, so daß der Riemenscheibenkörper 315 im entkoppelten Zustand ungehindert drehen kann.

Die Figuren 13 bis 16 zeigen dabei deutlich, daß die Kopplungseinrichtung 317 ein zwischen dem Riemenscheibenkörper 315 und der Antriebswelle 307 bzw. der Kopplungsscheibe 319 wirkendes Kopplungselement 320 umfaßt, wobei das Kopplungselement 320 zwischen der Innenfläche des Riemenscheibenkörpers 315 und der Außenfläche der Kopplungsscheibe 319 angeordnet ist und wobei die beiden Flächen - Innenfläche des Riemenscheibenkörpers 315 und Außenfläche der Kopplungsscheibe 319 - koaxial zueinander angeordnet sind.

Wie bereits zuvor erwähnt, ist zwischen dem Kopplungselement 320 und der Kopplungsscheibe 319 bzw. zwischen den beiden benachbarten Flächen dieser Bauteile ein der Kopplungseinrichtung 317 zugeordneter Schwingungsdämpfer 318 zum Dämpfen der Drehschwingungen vorgesehen, wobei dieser Schwingungsdämpfer 318 mit dem eigentlichen Vorgang des Koppelns bzw. Entkoppeins nichts zu tun hat.

Die Figuren 12 bis 16 lassen desweiteren erkennen, daß das Kopplungselement 320 im Sinne eines kreisringförmig ausgebildeten Druckkörpers 321 zur kraftschlüssigen Kopplung zwischen dem Riemenscheibenkörper 315 und der Kopplungsscheibe 319 ausgeführt ist. Im Konkreten handelt es sich bei dem Druckkörper 321 um einen dünnwandigen Metallbalg, der zur kraftschlüssigen Kopplung mit einem unter vorgebbarem Druck stehenden Strömungsmedium gefüllt ist. Die durch den Druckkörper 321 hervorgerufene Klemmwirkung bewerkstelligt die Kopplung zwischen Riemenscheibenkörper 315 und Kopplungsscheibe 319, wobei der Druckkörper 321 mittels Kleben, Löten, Punktschweißen oder dergleichen in seiner Position fixiert sein kann.

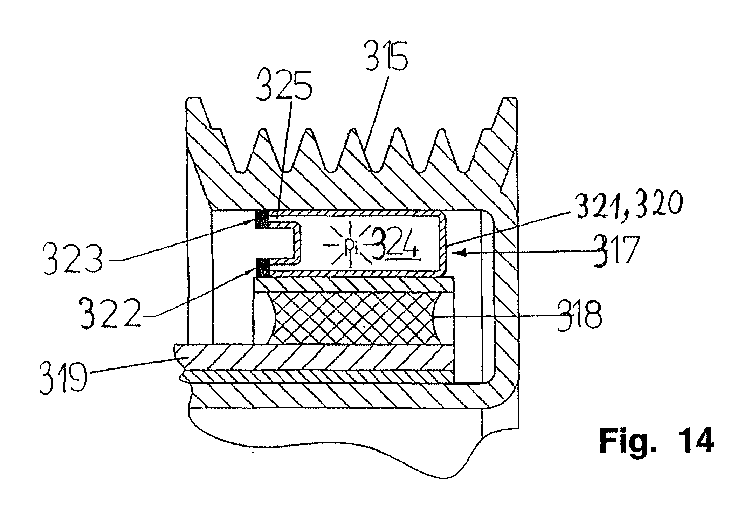

Der vergrößerten Darstellung in Fig. 14 läßt sich entnehmen, daß der Druckkörper 321 zur Druckentlastung und somit zur Entkopplung dienende mechanische Sollbruchstellen 322 aufweist. Ebenso sind dort Schmelzsicherungen 323 vorgesehen, so daß bei dem in den Figuren 13 und 14 dargestellten Ausführungsbeispiel eine Kombination von einer Kopplungseinrichtung 317 realisiert ist, die bei Überschreiten sowohl einer definierten thermischen als auch bei Überschreiten einer definierten mechanischen Belastbarkeitsgrenze zwangsweise entkoppelt.

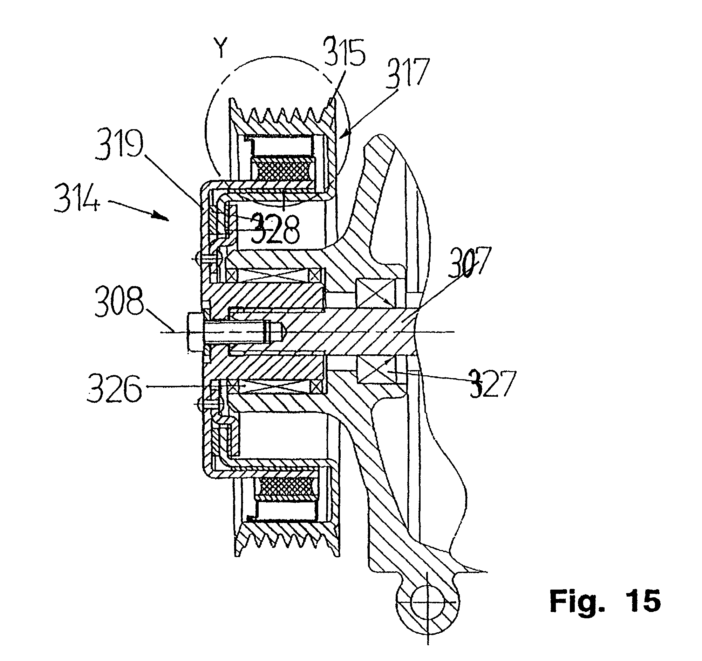

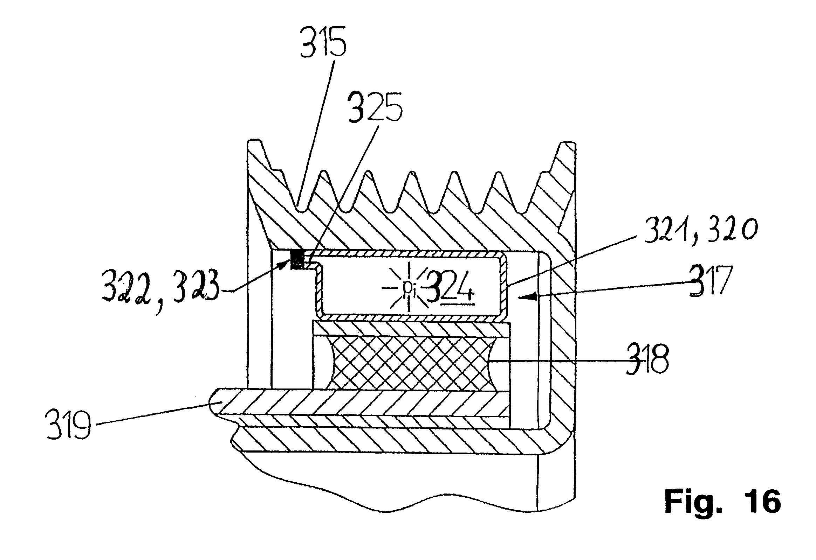

Bei dem mit den Figuren 15 und 16 dargestellten Ausführungsbeispiel liegen die mechanischen Sollbruchstellen 322 und die Schmelzsicherungen 323 nicht wie bei dem in den Figuren 13 und 14 gezeigten Ausführungsbeispiel einander gegenüber, sondern sind lediglich auf der der Innenfläche des Riemenscheibenkörpers 315 zugewandten Seite des Druckkörpers 321 ausgebildet.

Die Figuren 13 bis 16 zeigen weiter gemeinsam, daß der Druckkörper 321 einen im Längsschnitt im wesentlichen rechtwinkligen Druckraum 324 und sich daran anschließende, im Querschnitt gegenüber dem Druckraum 324 verjüngte, nach außen gerichtete Trennbereiche 325 umfaßt, wobei bei dem in den Figuren 13 und 14 gezeigten Ausführungsbeispiel zwei Trennbereiche einander gegenüberliegend angeordnet sind, die sich im Längsschnitt des Druckkörpers 321 U-förmig mit ihren Schenkeln an den eigentlichen Druckraum 324 anschließen.

Bei dem in den Figuren 15 und 16 gezeigten Ausführungsbeispiel ist lediglich auf einer Seite des Druckkörpers 321 - auf der der Innenfläche des Riemenscheibenkörpers 315 zugewandten Seite - ein Trennbereich 325 vorgesehen, an dem sowohl die mechanischen Sollbruchstellen 322 als auch die Schmelzsicherungen 323 vorgesehen sind.

Des weiteren ist zu beachten, daß gemäß den Darstellungen in den Figuren 13 und 15 Nadellager 326 vorgesehen sind, die die Antriebswelle 307 außerhalb des Triebraums 305 lagern. Darüberhinaus dienen die Nadellager 326 zur Lagerung der Kopplungsscheibe 319. Aufgrund der Vorkehrung der Nadellager 326 außerhalb des Triebraums 305 laufen diese Lager unter Umgebungsatmosphäre, wobei Dichtungen 327 gegenüber dem Triebraum 305 abdichten.

Schließlich lassen die Figuren 13 und 15 erkennen, daß zwischen dem Riemenscheibenkörper 315 und der Kopplungsscheibe 319 Reibbeläge 328 vorgesehen sind, die als "Notlager" bzw. Lagerfläche oder Lagerbeschichtung dienen. Blockiert nämlich der Kompressor und tritt entsprechend den voranstehenden Ausführungen eine Entkopplung ein, so stehen auch die zuvor erörterten Nadellager 326. Damit nun der Riemenscheibenkörper 315 über eine akzeptable Dauer hinweg, so beispielsweise für mindestens einige Stunden, ungehindert weiter drehen kann, ist dazu eine Art Notlagerung des Riemenscheibenkörpers 315 erforderlich, die über den Reibbelag 328 erfolgt, der sowohl radial als auch quer ausgebildet ist. Temperaturbeständige Lagermaterialien lassen sich hierzu verwenden.

Hinsichtlich der Funktionsweise der hier realisierten Kopplungseinrichtung wird zur Vermeidung von Wiederholungen auf den allgemeinen Teil der Beschreibung verwiesen.

Die Erfindung ist auch nicht auf (das) Ausführungsbeispiel(e) der Beschreibung beschränkt. Vielmehr sind im Rahmen der Erfindung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten erfinderisch sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

Hinsichtlich weiterer vorteilhafter Ausgestaltungen der vorliegenden Erfindung, die den Figuren nicht zu entnehmen sind, wird zur Vermeidung von Wiederholungen auf den allgemeinen Teil der Beschreibung verwiesen.

Abschließend sei hervorgehoben, daß die voranstehend lediglich beispielhaft genannten Ausführungsbeispiele die erfindungsgemäße Lehre lediglich erläutert, jedoch nicht auf die Ausführungsbeispiele einschränken.

## Patentansprüche

1. Kompressor, insbesondere für die Klimaanlage eines Kraftfahrzeugs, mit einem Gehäuse (1) und einer in dem Gehäuse (1) angeordneten Verdichtereinheit (2) zum Ansaugen und Verdichten eines Kältemittels, wobei die Verdichterereinheit (2) in einem Zylinderblock (6) laufende Kolben (7) und eine die Kolben (7) antreibende Antriebsscheibe (8) - Taumel- oder Schwenkscheibe - umfaßt, wobei die Antriebsscheibe (8) über eine deren Randbereich zugeordnete Gelenkvorrichtung (14) mit der Antriebswelle (13) wirkverbunden ist
**dadurch gekennzeichnet, dass** die Antriebsscheibe (8) derart gelagert ist, dass die Mittellinie (9) der Lagerung eine Tangente des den Hub definierenden Teilkreises (10) bildet, so dass der Neigungswinkel (11) der Antriebsscheibe (8) veränderbar ist, ohne den oberen Totpunkt über der Hubstellung zu verschieben.

2. Kompressor, nach Anspruch 1, **dadurch gekennzeichnet, daß** die Antriebsscheibe (8) über die Gelenkvorrichtung (14) an einen mit der Antriebswelle (13) drehfest verbundenen Mitnahmekörper (15) angelenkt ist, wobei die Antriebsscheibe (8) von dem Mitnahmekörper (15) zumindest teilweise umgeben sein kann und der Mitnahmekörper (15) vorzugsweise ringförmig, insbesondere trommelförmig oder als Ringsegment ausgebildet sein kann.

3. Kompressor, nach Anspruch 2, **dadurch gekennzeichnet, daß** der Mitnahmekörper (15) integraler Bestandteil der Antriebswelle (13) ist.

4. Kompressor, nach Anspruch 2 oder 3, **dadurch gekennzeichnet, daß** der Mitnahmekörper (15) einen Anschlag (16, 17) für die Schwenkbewegung der Antriebsscheibe (8) bildet und zwar vorzugsweise sowohl für die maximale als auch für die minimale Verschwenkung der Antriebsscheibe (8).

5. Kompressor, nach einem der Ansprüche 1 bis 4, **dadurch gekennzeichnet, daß** die Antriebsscheibe (8) über ein zwischen der Antriebsscheibe (8) und dem Mitnahmekörper (15) wirkendes Schwenklager (18) gelagert ist, wobei das Schwenklager (18) einen Kugelabschnitt und/oder einen Lagerstift (19) umfassen kann.

6. Kompressor, nach einem der Ansprüche 1 bis 5, **dadurch gekennzeichnet, daß** zwischen der Antriebsscheibe (8) und den Kolben (7) Kopplungsmittel (20) wirken, die einen dem Kolben (7) zugeordneten, vorzugsweise im Sinne einer Gleitbahn wirkenden Umgriff (21) und einen der Antriebsscheibe (8) zugeordneten, vorzugsweise im Sinne eines Gleitschuhs wirkenden Kugelkörper (22) umfassen, wobei der Umgriff (21) des Kolbens (7) auf der der Antriebswelle (13) zugewandten Seite die Antriebsscheibe (8) durchdringen und nach außen, vorzugsweise unter Einbeziehung des Gleitschuhs bzw. des Kugelkörpers (22), zumindest teilweise umgreifen kann.

7. Kompressor, nach einem der Ansprüche 1 bis 6, **dadurch gekennzeichnet, daß** der Zylinderblock (6) eine Verdrehsicherung für die Kolben (7) umfaßt, wobei vorzugsweise als Abstützfläche (23) zwischen Zylinderblock (6) und Kolben (7) oder als Abstützfläche (23) zwischen Kolben (7) und Antriebswelle (13) oder als Abstützfläche (23) zwischen Kolben (7) und Mitnahmekörper (15) ausgeführt sein kann.

8. Kompressor, nach Anspruch 7, **dadurch gekennzeichnet, daß** zur Verdrehsicherung "nicht runde" Kolben (7) und/oder ein Führungselement, vorzugsweise ein Stift, im Kolben (7) vorgesehen ist.

9. Kompressor, nach einem der Ansprüche 1 bis 8, **dadurch gekennzeichnet, daß** die Antriebsscheibe (8) im Sinne eines Fliehkraftreglers arbeitet.

10. Kompressor, nach einem der Ansprüche 1 bis 9, **dadurch gekennzeichnet, daß** die Antriebsscheibe (108) über einen mit der Antriebswelle (113) fest verbundenen, in der Antriebsscheibe (108) vorzugsweise in deren Randbereich gleitend gelagerten Führungsarm (114) mit der Antriebswelle (113) wirkverbunden ist, wobei der Führungsarm (114) als Vierkant ausgebildet sein kann.

11. Kompressor, nach einem der Ansprüche 1 bis 10, **dadurch gekennzeichnet, daß** der Führungsarm (114) orthogonal zu der Längsachse (115) der Antriebswelle (113) angeordnet ist.

12. Kompressor, nach einem der Ansprüche 1 bis 11, **dadurch gekennzeichnet, daß** der Führungsarm (114) in die Antriebswelle (113) eingepreßt ist.

13. Kompressor, nach einem der Ansprüche 1 bis 12, **dadurch gekennzeichnet, daß** zur gleitenden Lagerung des Führungsarmes (114) in der Antriebsscheibe (108) am freien Ende des Führungsarmes (114) ein Führungskörper (116) ausgebildet ist, wobei der Führungskörper (116) quer zur Längsachse des Führungsarms (114) im wesentlichen zylindrisch ausgebildet sein kann.

14. Kompressor, nach einem der Ansprüche 1 bis 13, **dadurch gekennzeichnet, daß** der Führungskörper (116) direkt oder indirekt in der Antriebsscheibe (108) gelagert ist.

15. Kompressor nach Anspruch 13 oder 14, **dadurch gekennzeichnet, daß** der Führungskörper (116) mit seiner Mantelfläche (117) zur gleitenden Anlage an gegenüberliegenden Innenwandungen der Antriebsscheibe (108) dient und/oder daß im Wirkbereich des Führungskörpers (116) beidseits der Antriebsscheibe (108) zum schwenkbaren Eingriff in den Kolben (107) dienende Kugelsegmente (118) vorgesehen sind, wobei der Mittelpunkt (119) der durch die beiden Kugelsegmente (118) gebildeten Kugel im Mittelpunkt (119) des zylindrischen Führungskörpers (116) bzw. auf dessen Längsachse (120) liegen kann.

16. Kompressor, nach Anspruch 15, **dadurch gekennzeichnet, daß** der Kolben (107) mit seinem Anschlußbereich (121) um das freie Ende der Antriebscheibe (108) auf die Kugelsegmente (118) greift.

17. Kompressor, nach einem der Ansprüche 1 bis 14, **dadurch gekennzeichnet, daß** die Antriebsscheibe (108) über ein Gleitlager (122) mit dem einen endseitigen Gleitschuh (123) aufweisenden Kolben (107) wirkverbunden ist, wobei der Kolben (107) vorzugsweise als zylindrischer Vollkörper mit beweglichem Gleitschuh (123) ausgebildet ist und der Gleitschuh (123) mittels Kugelgelenk (124) mit dem Kolben (107) verbunden sein kann.

18. Kompressor, nach Anspruch 17, **dadurch gekennzeichnet, daß** der Gleitschuh (123) mittels eines Niederhalters (125) auf der Antriebsscheibe (108) gehalten ist, wobei der Niederhalter (125) drehfest angeordnet sein kann und wobei zwischen dem Niederhalter (125), dem Gleitschuh (123) und der Antriebsscheibe (108) ein Gleitlager (122) wirken kann.

19. Kompressor, nach Anspruch 18, **dadurch gekennzeichnet, daß** das Gleitlager (122) einen sich zwischen Antriebsscheibe (108) und Niederhalter (125) erstreckenden Distanzring (126) und eine sich an den Distanzring (126) anschließende, sich zumindest teilweise über den Niederhalter (125) erstreckende Niederhalterführung (127) umfaßt.

20. Kompressor, nach Anspruch 18 oder 19, **dadurch gekennzeichnet, daß** der Niederhalter (125) als vorzugsweise kreisrunde Scheibe ausgeführt ist und vorzugsweise der Anzahl der Kolben (107) entsprechende Durchgänge (128) für den Kolben (107) bzw. für eine Verbindung zwischen dem Kugelgelenk (124) und dem Gleitschuh (123) aufweist, wobei die Durchgänge (128) als am Rand des Niederhalters (125) auslaufende Schlitze oder als Langlöcher (132) ausgebildet sein können.

21. Kompressor, nach einem der Ansprüche 1 bis 20, **dadurch gekennzeichnet, daß** zur axialen Führung der Antriebsscheibe (108) ein fest mit der Antriebsscheibe (108) verbundener Führungsstift (131) in ein in der Antriebswelle (113) ausgebildetes Langloch (132) gleitend greift, wobei sich der Führungsstift (131) durch das Langloch (132) hindurch erstrecken und beidseits der Antriebswelle (113) mit der Antriebsscheibe (108) verbunden sein kann.

22. Kompressor, nach einem der Ansprüche 1 bis 21, **dadurch gekennzeichnet, daß** zur axialen Führung der Antriebsscheibe (108) ein fest mit der Antriebsscheibe (108) verbundener Führungskörper in eine auf der Antriebswelle (113) ausgebildete Führung greift.

23. Kompressor, nach einem der Ansprüche 1 bis 22, **dadurch gekennzeichnet, daß** die Antriebsscheibe (108) zur axialen Führung mittels einer Führungsmuffe auf die Antriebswelle (113) greift.

## Claims

1. Compressor, in particular for the climate control system of a motor vehicle, having a housing (1) and a compressor unit (2), which is arranged in the housing (1), for drawing in and compressing a coolant, the compressor unit (2) comprising pistons (7) which run in a cylinder block (6) and a drive disc (8) - swash plate or swivel plate - which drives the pistons (7), the drive disc (8) being operatively connected to the drive shaft (13) by means of an articulated mechanism (14) which is associated with the edge region thereof, **characterised in that** the drive disc (8) is supported in such a manner that the centre line (9) of the bearing forms a tangent of the pitch circle (10) which defines the lift so that the inclination angle (11) of the drive disc (8) is variable without shifting the top dead centre above the lift position.

2. Compressor according to claim 1, **characterised in that** the drive disc (8) is articulated via the articulated mechanism (14) to a carrier member (15) which is connected in a rotationally secure manner to the drive shaft (13), the drive disc (8) being able to be at least partially surrounded by the carrier member (15) and the carrier member (15) preferably being able to be of annular form, in particular drum-shaped or in the form of an annular portion.

3. Compressor according to claim 2, **characterised in that** the carrier member (15) is an integral constituent of the drive shaft (13).

4. Compressor according to claim 2 or 3, **characterised in that** the carrier member (15) forms a stop (16, 17) for the swivelling movement of the drive disc (8), preferably both for the maximum and minimum swivelling of the drive disc (8).

5. Compressor according to any one of claims 1 to 4, **characterised in that** the drive disc (8) is supported by means of a swivel bearing (18) which acts between the drive disc (8) and the carrier member (15), the swivel bearing (18) being able to comprise a spherical portion and/or a hinge pin (19).

6. Compressor according to any one of claims 1 to 5, **characterised in that** coupling means (20) act between the drive disc (8) and the pistons (7) and comprise a surrounding member (21), which is associated with the piston (7) and which preferably acts in the manner of a slide way, and a spherical member (22) which is associated with the drive disc (8) and which preferably acts in the manner of a guide shoe, the surrounding member (21) of the piston (7) being able to extend through the drive disc (8) at the side that faces the drive shaft (13) and being able to engage at least partially round it in an outward direction, preferably including the guide shoe or the spherical member (22).

7. Compressor according to any one of claims 1 to 6, **characterised in that** the cylinder block (6) comprises an anti-torsion means for the pistons (7), the means preferably being able to be in the form of a support face (23) between the cylinder block (6) and the pistons (7) or a support face (23) between the pistons (7) and the drive shaft (13) or a support face (23) between the pistons (7) and the carrier member (15).

8. Compressor according to claim 7, **characterised in that** "non-round" pistons (7) and/or a guide element, preferably a pin, is/are provided in the piston (7) as an anti-torsion means.

9. Compressor according to any one of claims 1 to 8, **characterised in that** the drive disc (8) functions in the manner of a centrifugal governor.

10. Compressor according to any one of claims 1 to 9, **characterised in that** the drive disc (108) is operatively connected to the drive shaft (113) via a guide arm (114) which is securely connected to the drive shaft (113) and which is slidingly supported in the drive disc (108), preferably in the edge region thereof, the guide arm (114) being able to be in the form of a square.

11. Compressor according to any one of claims 1 to 10, **characterised in that** the guide arm (114) is arranged orthogonally to the longitudinal axis (115) of the drive shaft (113).

12. Compressor according to any one of claims 1 to 11, **characterised in that** the guide arm (114) is pressed into the drive shaft (113).

13. Compressor according to any one of claims 1 to 12, **characterised in that** a guide member (116) is arranged at the free end of the guide arm (114) for the sliding support of the guide arm (114) in the drive disc (108), the guide member (116) transverse to the longitudinal axis of the guide arm (114) being able to be of substantially cylindrical form.

14. Compressor according to any one of claims 1 to 13, **characterised in that** the guide member (116) is supported directly or indirectly in the drive disc (108).

15. Compressor according to claim 13 or 14, **characterised in that** the guide member (116) is used, at the outer face (117) thereof, for the sliding contact with opposing inner walls of the drive disc (108) and/or **in that** spherical portions (118), which are used for pivotable engagement in the pistons (107), are provided in the active region of the guide member (116) on both sides of the drive disc (108), the centre (119) of the sphere which is formed by the two spherical portions (118) being able to be at the centre (119) of the cylindrical guide member (116) or on the longitudinal axis (120) thereof.

16. Compressor according to claim 15, **characterised in that** the piston (107) engages, with the connection region (121) thereof, on the spherical portions (118) around the free end of the drive disc (108).

17. Compressor according to any one of claims 1 to 14, **characterised in that** the drive disc (108) is operatively connected to the piston (107), which has a guide shoe (123) at the end face, by means of a sliding bearing (122), the piston (107) preferably being in the form of a cylindrical solid member having a movable guide shoe (123) and the guide shoe (123) being able to be connected to the piston (107) by means of a ball and socket joint (124).

18. Compressor according to claim 17, **characterised in that** the guide shoe (123) is held on the drive disc (108) by means of a holding-down device (125), the holding-down device (125) being able to be arranged in a rotationally secure manner and a sliding bearing (122) being able to act between the holding-down device (125), the guide shoe (123) and the drive disc (108).

19. Compressor according to claim 18, **characterised in that** the sliding bearing (122) comprises a spacer ring (126), which extends between the drive disc (108) and the holding-down device (125), and a holding-down guide (127) which abuts the spacer ring (126) and which extends at least partially over the holding-down device (125).

20. Compressor according to claim 18 or 19, **characterised in that** the holding-down device (125) is preferably in the form of a circular disc and has openings (128) for the piston (107) or for a connection between the ball and socket joint (124) and the guide shoe (123), which openings (128) preferably correspond to the number of pistons (107), it being possible for the openings (128) to be in the form of slots or elongate holes (132) which run out at the edge of the holding down device (125).

21. Compressor according to any one of claims 1 to 20, **characterised in that**, in order to guide the drive disc (108) axially, a guide pin (131), which is securely connected to the drive disc (108), engages slidingly in an elongate hole (132), which is formed in the drive shaft (113), the guide pin (131) extending through the elongate hole (132) and being able to be connected to the drive disc (108) at both sides of the drive shaft (113).

22. Compressor according to any one of claims 1 to 21, **characterised in that** a guide member, which is securely connected to the drive disc (108), engages in a guide which is arranged on the drive shaft (113) in order to guide the drive disc (108) axially.

23. Compressor according to any one of claims 1 to 22, **characterised in that** the drive disc (108) engages on the drive shaft (113) for axial guiding by means of a guide sleeve.

## Revendications

1. Compresseur, en particulier pour l'installation de conditionnement d'air d'un véhicule automobile, avec un carter (1) et unité de compresseur (2) disposée dans le carter (1) pour l'aspiration et la compression d'un fluide frigorigène, l'unité de compresseur (1) comprenant des pistons (7) mobiles dans un bloc-cylindres (6) et un disque moteur (8) - disque en nutation ou pivotant- entraînant les pistons (7), le disque moteur (8) étant relié activement à l'arbre moteur (13) par l'intermédiaire d'un dispositif d'articulation (14) adjoint à sa zone de bord,
**caractérisé en ce que** le disque moteur (8) est monté de telle manière que la ligne médiane (9) du logement forme une tangente du cercle partiel (10) définissant la levée, de telle manière que l'angle d'inclinaison (11) du disque moteur (8) est modifiable sans déplacer le point mort haut au-dessus de la position de levée.

2. Compresseur selon la revendication 1,
**caractérisé en ce que** le disque moteur (8) est articulé, par l'intermédiaire du dispositif d'articulation (11), à un corps d'entraînement (15) relié fixe en rotation à l'arbre moteur (13), le disque moteur (8) pouvant être entouré au moins partiellement par le corps d'entraînement (15) et le corps d'entraînement (15) pouvant être réalisé de préférence de forme annulaire, en particulier en forme de tambour, ou sous forme de segment annulaire.

3. Compresseur selon la revendication 2,
**caractérisé en ce que** le corps d'entraînement (15) est une partie constitutive intégrale de l'arbre moteur (13).

4. Compresseur selon la revendication 2 ou 3,
**caractérisé en ce que** le corps d'entraînement (15) forme une butée (16, 17) pour le déplacement en pivotement du disque moteur (8) et en fait de préférence aussi bien pour le pivotement maximal que minimal du disque moteur (8).

5. Compresseur selon l'une des revendications 1 à 4,
**caractérisé en ce que** le disque moteur (8) est monté par l'intermédiaire d'un palier de pivotement (18) agissant entre le disque moteur (8) et le corps d'entraînement (15), le palier de pivotement (18) pouvant comprendre un segment sphérique et/ou une broche de palier (19).

6. Compresseur selon l'une des revendications 1 à 5,
**caractérisé en ce que**, entre le disque moteur (8) et les pistons (7), agissent des moyens d'accouplement (20) qui comprennent un mors enveloppant (21) adjoint au piston (7), de préférence agissant dans le sens d'une glissière, et un corps de bille (22) adjoint au disque moteur (8), de préférence agissant dans le sens d'un patin de guidage, le mors enveloppant (21) du piston (7) pouvant traverser le disque moteur (8) du côté tourné vers l'arbre moteur (13) et l'envelopper au moins partiellement vers l'extérieur, de préférence en intégrant le patin de guidage ou respectivement le corps de bille (22).

7. Compresseur selon l'une des revendications 1 à 6,
**caractérisé en ce que** le bloc-cylindres (6) comprend une sécurité anti-rotation pour les pistons (7), qui peut être réalisée de préférence sous forme de surface d'appui (23) entre bloc-cylindres (6) et pistons (7) ou en tant que surface d'appui (23) entre pistons (7) et arbre moteur (13) ou en tant que surface d'appui (23) entre pistons (7) et corps d'entraînement (15).

8. Compresseur selon la revendication 7,
**caractérisé en ce que**, pour la sécurité anti-rotation, on prévoit des pistons (7) « non cylindriques » et/ou un élément de guidage, de préférence une broche, dans le piston (7).

9. Compresseur selon l'une des revendications 1 à 8,
**caractérisé en ce que** le disque moteur (8) travaille dans le sens d'un régulateur centrifuge.

10. Compresseur selon l'une des revendications 1 à 9,
**caractérisé en ce que** le disque moteur (108) est relié activement à l'arbre moteur (113) par l'intermédiaire d'un bras de guidage (114) relié de manière fixe à l'arbre moteur (113), monté glissant, de préférence dans sa zone de bord, dans le disque moteur (108), le bras de guidage (114) pouvant être réalisé sous forme de carré.

11. Compresseur selon l'une des revendications 1 à 10,
**caractérisé en ce que** le bras de guidage (114) est disposé orthogonalement à l'axe longitudinal (115) de l'arbre moteur (113).

12. Compresseur selon l'une des revendications 1 à 11,
**caractérisé en ce que** le bras de guidage (114) est emmanché dans l'arbre moteur (113).

13. Compresseur selon l'une des revendications 1 à 12,
**caractérisé en ce qu'**un corps de guidage (116) est formé à l'extrémité libre du bras de guidage (114) pour le logement glissant du bras de guidage (114) dans le disque moteur (108), le corps de guidage (116) pouvant être réalisé sensiblement cylindrique transversalement à l'axe longitudinal du bras de guidage (114).

14. Compresseur selon l'une des revendications 1 à 13,
**caractérisé en ce que** le corps de guidage (116) est logé directement ou indirectement dans le disque moteur (108).

15. Compresseur selon la revendication 13 ou 14,
**caractérisé en ce que** le corps de guidage (116) sert, par sa surface d'enveloppe (117), au logement glissant sur des parois intérieures opposées du disque moteur (108) et/ou que des secteurs sphériques (118) servant à la prise pivotante dans les pistons (107) sont prévus dans la zone d'action du corps de guidage (116), le centre (119) de la bille formée par les deux secteurs sphériques (118) pouvant se trouver au centre (119) du corps de guidage (116) cylindrique ou respectivement sur son axe longitudinal (120).

16. Compresseur selon la revendication 15,
**caractérisé en ce que** le piston (107) est en prise par sa zone de raccordement (121) sur les secteurs sphériques (118) autour de l'extrémité libre du disque moteur (108).

17. Compresseur selon l'une des revendications 1 à 16,
**caractérisé en ce que** le disque moteur (108) est relié activement, par l'intermédiaire d'un palier de glissement (122), au piston (107) présentant un patin de guidage (123) du côté extrémité, le piston (107) étant réalisé de préférence sous forme de corps plein cylindrique à patin de guidage (123) mobile et le patin de guidage (123) pouvant être relié au piston (107) au moyen d'une articulation sphérique (124).

18. Compresseur selon la revendication 17,
**caractérisé en ce que** le patin de guidage (123) est maintenu sur le disque moteur (108) au moyen d'un serre-flan (125), le serre-flan (125) pouvant être disposé fixe en rotation et un palier de glissement (122) pouvant agir entre le serre-flan (125), le patin de glissement (123) et le disque moteur (108).

19. Compresseur selon la revendication 18,
**caractérisé en ce que** le palier de glissement (122) comprend une bague d'écartement (126) s'étendant entre le disque moteur (108) et le serre-flan (125) et un guidage (127) de serre-flan se raccordant à la bague d'écartement (126) et s'étendant au moins partiellement au-dessus du serre-flan (125).

20. Compresseur selon la revendication 18 ou 19,
**caractérisé en ce que** le serre-flan (125) est réalisé sous forme de disque, de préférence circulaire, et présente des passages (128), de préférence correspondant au nombre de pistons (107), pour les pistons (107) ou respectivement pour une liaison entre l'articulation sphérique (124) et le patin de glissement (123), les passages (128) pouvant être réalisés sous forme de fentes s'étendant au bord du serre-flan (125) ou sous forme de trous oblongs (132).

21. Compresseur selon l'une des revendications 1 à 20,
**caractérisé en ce qu'**une broche de guidage (131) reliée de manière fixe au disque moteur (108) est en prise glissante, pour le guidage axial du disque moteur (108), dans un trou oblong (132) formé dans l'arbre moteur (113), la broche de guidage (131) pouvant s'étendre à travers le trou oblong (132) et être reliée au disque moteur (108) des deux côtés de l'arbre moteur (113).

22. Compresseur selon l'une des revendications 1 à 21,
**caractérisé en ce qu'**un corps de guidage relié de manière fixe au disque moteur (108) est en prise, pour le guidage axial du disque moteur (108), dans un guidage formé sur l'arbre moteur (113).

23. Compresseur selon l'une des revendications 1 à 22,
**caractérisé en ce que** le disque moteur (108) est en prise, pour le guidage axial, sur l'arbre moteur (113) au moyen d'un manchon de guidage.
